# EUROPEAN PATENT APPLICATION

(11) **EP 3 648 394 A1**
(43) Date of publication of application: **06.05.2020**
(21) Application number: 17918013.8
(22) Date of filing: 19.07.2017
(51) Int. Cl.: H04L 5/26

(54) **INFORMATION TRANSMISSION METHOD AND DEVICE**

(71) Applicant: Beijing Xiaomi Mobile Software Co., Ltd., Beijing 100085 (CN)
(72) Inventor: ZHOU, Juejia, Beijing 100085 (CN)
(74) Representative: dompatent von Kreisler Selting Werner - Partnerschaft von Patent- und Rechtsanwälten mbB
(86) International application number: PCT/CN2017/093490
(87) International publication number: WO 2019/014865

(57) **Abstract**

Provided in the present disclosure are an information transmission method and device. The method comprises: determining whether an in-device interference could occur in user equipment; if so, acquiring transmission configuration information for avoiding the in-device interference, the transmission configuration information comprising an adjustment parameter for transmission time intervals; transmitting the transmission configuration information to the user equipment; and scheduling an uplink transmission resource and a downlink transmission resource according to the transmission configuration information, such that the user equipment performs transmission of uplink information within an original transmission time interval in such a way that at least the transmission of control information of downlink scheduling is not interfered. By adopting the information transmission method provided in the present disclosure to enable a base station to change a transmission interval, an in-device interference can be avoided effectively, and when user equipment uses radio frequency transceiver units having different working frequencies to transmit information at the same time, the interference from uplink transmission to downlink transmission can be avoided effectively.

## Description

### TECHNICAL FIELD

The present disclosure relates to the field of communications, and in particular, to an information transmission method and device.

### BACKGROUND

With the development of wireless communication technologies, mobile communication networks are gradually evolving to 5G networks. In an early stage of 5G network layout, a 4G network LTE (Long Term Evolution) system is stilled used for main signal coverage, while the 5G network, namely a NR (New Radio) system, is a powerful supplement to the data transmission service, forming the layout of LTE-NR interworking. At present, a large part of 5G NR deployment is concentrated in the frequency range of 3.4GHz to 4.2GHz, while the LTE has a large number of frequencies operating in the range of 1.7GHz to 1.8GHz, such as the mainstream FDD (Frequency Division Dual) Band 3 or the like.

Taking the above-mentioned working frequency band as an example, when the LTE radio frequency transceiver unit and the NR radio frequency transceiver unit disposed in user equipment (UE) work simultaneously, especially when the LTE radio frequency transceiver unit performs the uplink transmission by using the LTE uplink transmission resource and the NR radio frequency transceiver unit receives the downlink information by using the downlink transmission resource of the NR band simultaneously, harmonic interference is prone to occur. For example, the frequency-doubling signal of Band 3 is generated under the action of a nonlinear device in the LTE transmitting unit, and the frequency range is: (1.7 GHz ∼1.8GHz) × 2 = 3.4GHz ∼ 3.6GHz, which is just in the NR band, interfering the UE to receive the downlink information of the NR band.

In addition, when the NR radio frequency transceiver unit and/or the LTE radio frequency transceiver unit simultaneously perform uplink transmission by using uplink transmission resources of at least two different frequency ranges, a combined frequency component is generated due to the action of the nonlinear device in the transmitting unit. If a frequency of the combined frequency component is close to the frequency of other useful signals, for example, the frequency at which the receiving unit receives the downlink signal, then it may generate intermodulation interference to the useful signal, such as LTE downlink information.

The above-mentioned harmonic interference phenomenon and intermodulation interference phenomenon are collectively referred to as in-device interference. No matter what kind of in-device interference phenomenon occurs in the communication process, it may affect the sending and receiving of useful information by the UE, thereby affecting the communication quality and the user experience of UE in the 5G network.

### SUMMARY

To overcome the problems in the related art, the embodiments of the present disclosure provide an information transmission method and device for reducing the occurrence of the in-device interference.

According to a first aspect of the embodiments of the present disclosure, there is provided an information transmission method, which is applied in a base station, wherein the method includes:
determining whether in-device interference may occur in user equipment;
if it is determined that the in-device interference may occur, acquiring transmission configuration information for avoiding the in-device interference, wherein the transmission configuration information includes: an adjustment parameter of a transmission time interval;
sending the transmission configuration information to the user equipment; and
scheduling an uplink transmission resource and a downlink transmission resource according to the transmission configuration information, such that the user equipment performs transmission of uplink information within an original transmission time interval in such a way that at least transmission of control information of downlink scheduling is not interfered.

Optionally, determining whether in-device interference may occur in user equipment includes:
acquiring radio frequency support capability information of the user equipment, wherein the radio frequency support capability information includes: an uplink working frequency range and a downlink working frequency range;
determining whether in-device interference may occur in user equipment according to the uplink working frequency range and the downlink working frequency range.

Optionally, determining whether in-device interference may occur in user equipment includes:
acquiring uplink scheduling request information of the user equipment;
determining an uplink working frequency range and an uplink scheduling time according to the uplink scheduling request information;
determining downlink scheduling information for the user equipment, wherein the downlink scheduling information includes: a downlink working frequency range and a downlink scheduling time;
estimating an interference period according to the uplink scheduling time and the downlink scheduling time;
determining whether in-device interference may occur in user equipment within the interference period, according to the uplink working frequency range and the downlink working frequency range.

Optionally, determining whether in-device interference may occur in user equipment further includes:
determining that the user equipment does not preset an interference avoidance setting, wherein, the interference avoidance setting is: when the in-device interference occurs, the preset operation is triggered to stop information transmission of at least one working frequency range involved in the in-device interference.

Optionally, acquiring the transmission configuration information for avoiding the in-device interference includes:
determining transmission regulation capability information of the user equipment;
determining, according to the transmission regulation capability information, whether the user equipment supports a transmission time interval adjustment function;
if the user equipment supports the transmission time interval adjustment function, determining the transmission configuration information.

Optionally, acquiring the transmission configuration information for avoiding the in-device interference includes:
performing adjustment based on the original transmission time interval, and acquiring the transmission configuration information, wherein the transmission configuration information at least includes: uplink transmission configuration information.

Optionally, the performing adjustment based on the original transmission time interval and acquiring the transmission configuration information includes:
shortening an interval duration based on that an ending time of the original transmission time interval remains unchanged, and determining a time range of a target uplink transmission interval;
determining the uplink transmission configuration information according to the time range of the target uplink transmission interval.

Optionally, acquiring the transmission configuration information based on an original transmission time interval includes:
shortening the interval duration based on that a starting time of the original transmission time interval remains unchanged, and determining a time range of a target downlink transmission interval;
determining the downlink transmission configuration information according to the time range of the target downlink transmission interval.

Optionally, acquiring the transmission configuration information based on an original transmission time interval includes:
shortening a duration of the original transmission time interval, and determining a target uplink transmission interval duration and a target downlink transmission interval duration respectively;
adjusting the target uplink transmission interval duration and a starting time and an ending time of the target uplink transmission interval duration, so that a time range of the target uplink transmission interval and a time range of the target downlink transmission interval do not coincide with each other;
determining the transmission configuration information according to the time range of the target uplink transmission interval and the time range of the target downlink transmission interval.

Optionally, sending the transmission configuration information to the user equipment includes:
sending the transmission configuration information to the user equipment before the interference is about to occur.

Optionally, scheduling the uplink transmission resource and the downlink transmission resource according to the transmission configuration information includes:
scheduling uplink transmission resources for the uplink working frequency range according to the target uplink transmission interval in an original transmission time interval;
scheduling downlink transmission resources for the downlink working frequency range according to the original transmission time interval or the target downlink transmission interval in the same original transmission time interval.

Optionally, acquiring the transmission configuration information for avoiding the in-device interference includes:
dividing the original transmission time interval into a preset number of target transmission intervals;
determining first transmission configuration information according to a time range of each of the target transmission intervals;
determining a transmission cancellation mode of the target transmission interval, wherein the transmission cancellation mode is used to cancel a target uplink transmission interval and/or a target downlink transmission interval in an original transmission time interval when the interference is about to occur, so that uplink transmission and transmission of downlink scheduling control information do not coincide with each other;
acquiring second transmission configuration information, according to the transmission cancellation mode.

Optionally, sending the transmission configuration information to the user equipment includes:
sending the first transmission configuration information to the user equipment when the user equipment accesses a network;
sending the second transmission configuration information to the user equipment before the interference is about to occur.

Optionally, scheduling the uplink transmission resource and the downlink transmission resource according to the transmission configuration information includes:
scheduling the uplink transmission resource and the downlink transmission resource according to the target transmission interval, after the user equipment accesses the network;
when the interference is about to occur, in an original transmission time interval, cancelling scheduling of the uplink transmission resource corresponding to at least one target uplink transmission interval for the uplink working frequency range, and/or cancelling scheduling of the downlink transmission resource corresponding to at least one target downlink transmission interval for the downlink working frequency range.

According to a second aspect of the embodiments of the present disclosure, there is provided an information transmission method, which is applied in user equipment, wherein, the method includes:
receiving transmission configuration information from a base station to avoid an in-device interference, wherein the transmission configuration information includes: an adjustment parameter of a transmission time interval;
transmitting uplink information by using uplink transmission resource scheduled by the base station according to the transmission configuration information; and
acquiring downlink information from downlink resources scheduled by the base station according to the transmission configuration information.

Optionally, before receiving the transmission configuration information from the base station to avoid the in-device interference, the method further includes:
reporting radio frequency support capability information of the user equipment to the base station, so that the base station determines whether the in-device interference may occur according to the radio frequency support capability information.

Optionally, the method further includes:
sending an avoidance setting detection report to the base station, wherein the avoidance setting detection report is used to report whether the user equipment triggers a preset operation when the in-device interference occurs, so that information transmission of at least one working frequency range involved in the in-device interference stops.

Optionally, the method further includes:
reporting regulation capability information of the user equipment to the base station, so that the base station determines whether the user equipment supports a transmission time interval adjustment function according to the regulation capability information.

According to a third aspect of the embodiments of the present disclosure, there is provided an information transmission device, which is disposed in a base station, wherein, the device includes:
an interference determining module, configured to determine whether in-device interference may occur in user equipment;
a configuration information acquiring module, configured to: acquire transmission configuration information for avoiding the in-device interference, when it is determined that the in-device interference may occur in the user equipment, wherein the transmission configuration information includes: an adjustment parameter of transmission time interval;
a sending module, configured to transmit the transmission configuration information to the user equipment;
a scheduling module, configured to schedule an uplink transmission resource and a downlink transmission resource according to the transmission configuration information, such that the user equipment performs transmission of uplink information within an original transmission time interval in such a way that at least transmission of control information of downlink scheduling is not interfered.

Optionally, the interference determining module includes:
a radio frequency information acquiring submodule, configured to acquire radio frequency support capability information of the user equipment, wherein the radio frequency support capability information includes: an uplink working frequency range and a downlink working frequency range;
a first interference determining submodule, configured to determine whether in-device interference may occur in user equipment according to the uplink working frequency range and the downlink working frequency range.

Optionally, the interference determining module includes:
a scheduling request acquiring submodule, configured to acquire uplink scheduling request information of the user equipment;
an uplink scheduling information determining submodule, configured to determine an uplink working frequency range and an uplink scheduling time according to the uplink scheduling request information;
a downlink scheduling information determining submodule, configured to determine downlink scheduling information for the user equipment, wherein the downlink scheduling information includes: a downlink working frequency range and a downlink scheduling time;
an interference time estimating submodule, configured to estimate an interference period according to the uplink scheduling time and the downlink scheduling time;
a second determining submodule, configured to determine whether in-device interference may occur in user equipment within the interference period, according to the uplink working frequency range and the downlink working frequency range.

Optionally, the interference determining module further includes:
a third determining submodule, configured to determine that the user equipment does not preset an interference avoidance setting, wherein, the interference avoidance setting is: when the in-device interference occurs, the preset operation is triggered to stop information transmission of at least one working frequency range involved in the in-device interference.

Optionally, the configuration information acquiring module includes:
a regulation capability determining submodule, configured to determine transmission regulation capability information of the user equipment;
an adjustment function determining submodule, configured to determine, according to the transmission regulation capability information, whether the user equipment supports a transmission time interval adjustment function;
a configuration information acquiring submodule, configured to determine the transmission configuration information, if the user equipment supports the transmission time interval adjustment function.

Optionally, the configuration information acquiring module is configured to perform adjustment based on an original transmission time interval and acquire the transmission configuration information, wherein the transmission configuration information at least includes: uplink transmission configuration information.

Optionally, the configuration information acquiring module includes:
an uplink transmission interval adjusting submodule, configured to shorten an interval duration based on that an ending time of the original transmission time interval remains unchanged, and determine a time range of a target uplink transmission interval;
an uplink configuration information determining submodule, configured to determine the uplink transmission configuration information according to the time range of the target uplink transmission interval.

Optionally, the configuration information acquiring module further includes:
a downlink transmission interval adjusting submodule, configured to shorten the interval duration based on that a starting time of the original transmission time interval remains unchanged, and determine a time range of a target downlink transmission interval;
a downlink configuration information determining submodule, configured to determine the downlink transmission configuration information according to the time range of the target downlink transmission interval.

Optionally, the configuration information acquiring module includes:
a duration adjusting submodule, configured to shorten a duration of the original transmission time interval, and determine a target uplink transmission interval duration and a target downlink transmission interval duration respectively;
a location determining submodule, configured to adjust the target uplink transmission interval duration and a starting time and an ending time of the target uplink transmission interval duration, so that a time range of the target uplink transmission interval and a time range of the target downlink transmission interval do not coincide with each other;
a configuration information determining submodule, configured to determine the transmission configuration information according to the time range of the target uplink transmission interval and the time range of the target downlink transmission interval.

Optionally, the sending module is configured to send the transmission configuration information to the user equipment before the interference is about to occur.

Optionally, the scheduling module includes:
a first scheduling submodule, configured to schedule uplink transmission resources for the uplink working frequency range according to the target uplink transmission interval in an original transmission time interval;
a second scheduling submodule, configured to schedule downlink transmission resources for the downlink working frequency range according to the original transmission time interval or the target downlink transmission interval in the same original transmission time interval.

Optionally, the configuration information acquiring module includes:
a dividing submodule, configured to divide the original transmission time interval into a preset number of target transmission intervals;
a first configuration information determining submodule, configured to determine first transmission configuration information according to a time range of each of the target transmission intervals;
a cancellation mode determining submodule, configured to determine a transmission cancellation mode of the target transmission interval, wherein the transmission cancellation mode is used to cancel a target uplink transmission interval and/or a target downlink transmission interval in an original transmission time interval when the interference is about to occur, so that uplink transmission and transmission of downlink scheduling control information do not coincide with each other;
a second configuration information determining submodule, configured to acquire second transmission configuration information, according to the transmission cancellation mode.

Optionally, the sending module includes:
a first configuration information sending submodule, configured to send the first transmission configuration information to the user equipment when the user equipment accesses a network;
a second configuration information sending submodule, configured to send the second transmission configuration information to the user equipment before the interference is about to occur.

Optionally, the scheduling module includes:
a third scheduling submodule, configured to schedule the uplink transmission resource and the downlink transmission resource according to the target transmission interval, after the user equipment accesses the network;
a scheduling cancelling submodule, configured to, when the interference is about to occur, in an original transmission time interval, cancel scheduling of the uplink transmission resource corresponding to at least one target uplink transmission interval for the uplink working frequency range, and/or cancel scheduling of the downlink transmission resource corresponding to at least one target downlink transmission interval for the downlink working frequency range.

According to a fourth aspect of the embodiments of the present disclosure, there is provided an information transmission device, which is disposed in user equipment, wherein, the device includes:
a receiving module, configured to receive transmission configuration information sent by a base station for avoiding an in-device interference, wherein the transmission configuration information includes: an adjustment parameter of a transmission time interval;
an uplink transmission module, configured to transmit uplink information by using uplink transmission resources scheduled by the base station according to the transmission configuration information;
a downlink transmission module, configured to acquire downlink information from downlink resources scheduled by the base station according to the transmission configuration information.

Optionally, the device further includes:
a radio frequency capability reporting module, configured to report radio frequency support capability information of the user equipment to the base station, so that the base station determines whether the in-device interference may occur according to the radio frequency support capability information.

Optionally, the device further includes:
an avoidance setting reporting module, configured to send an avoidance setting detection report to the base station, wherein the avoidance setting detection report is used to report whether the user equipment triggers a preset operation when the in-device interference occurs, so that information transmission of at least one working frequency range involved in the in-device interference stops.

Optionally, the device further includes:
a regulation capability reporting module, configured to report regulation capability information of the user equipment to the base station, so that the base station determines whether the user equipment supports a transmission time interval adjustment function according to the regulation capability information.

According to a fifth aspect of the embodiments of the present disclosure, there is provided a non-temporary computer readable storage medium having stored thereon computer instructions, wherein the instructions are executed by a processor to implement the step of any one of the methods in the first aspect.

According to a sixth aspect of the embodiments of the present disclosure, there is provided a non-temporary computer readable storage medium having stored thereon computer instructions, wherein the instructions are executed by a processor to implement the step of any one of the methods in the second aspect.

According to a seventh aspect of the embodiments of the present disclosure, there is provided an information transmission device, wherein, the device includes:
a processor;
a memory for storing instructions executable by the processor;
wherein the processor is configured to perform:
determining whether in-device interference may occur in user equipment;
if it is determined that the in-device interference may occur, acquiring transmission configuration information for avoiding the in-device interference, wherein the transmission configuration information includes: an adjustment parameter of a transmission time interval;
sending the transmission configuration information to the user equipment;
scheduling an uplink transmission resource and a downlink transmission resource according to the transmission configuration information, such that the user equipment performs transmission of uplink information within an original transmission time interval in such a way that at least transmission of control information of downlink scheduling is not interfered.

According to an eighth aspect of the embodiments of the present disclosure, there is provided an information transmission device, wherein, the device includes:
a processor;
a memory for storing instructions executable by the processor;
wherein the processor is configured to perform:
receiving transmission configuration information from a base station to avoid an in-device interference, wherein the transmission configuration information includes: an adjustment parameter of a transmission time interval;
transmitting uplink information by using uplink transmission resource scheduled by the base station according to the transmission configuration information;
acquiring downlink information from downlink resources scheduled by the base station according to the transmission configuration information.

The technical solutions provided by the embodiments of the present disclosure may include the following beneficial effects.

In the embodiment of the present disclosure, when the base station determines to schedule transmission resources for one user equipment according to a preset scheduling mode, the in-device interference may occur in the user equipment. At this time, the base station may change the transmission time interval to adjust the resource scheduling strategy, thereby avoiding the occurrence of in-device interference when the user equipment uses the transmission resource scheduled by the base station to transmit information, at least preventing the uplink transmission of UE from interfering with UE receiving the downlink scheduling control information of the downlink transmission, and avoiding the inability to parse downlink data due to in-device interference, thereby improving the transmission performance of the 5G network system.

In the present disclosure, the base station may determine in advance whether the in-device interference may occur when the UE performs the uplink and downlink transmission simultaneously, according to the acquired radio frequency support capability of the user equipment, that is, the uplink working frequency range and the downlink working frequency range of the user equipment, so as to be prepared to adjust scheduling strategy in advance, and timely formulate the scheduling strategy for preventing the occurrence of the device interference.

In the present disclosure, the base station may also determine in real time whether device interference may occur according to the uplink scheduling request of the UE, , so that the transmission configuration information used to avoid the in-device interference may be sent to the user equipment at a time before the interference is about to occur, and the scheduling strategy is changed in time to avoid the occurrence of device interference in real time, improving the effectiveness of information transmission.

In the present disclosure, before performing the resource scheduling for avoiding the in-device interference, the base station may further determine whether the user equipment itself has a setting for avoiding the in-device interference. After determining that the user equipment does not have the ability to avoid the in-device interference, the base station may effectively avoid the in-device interference through the method of changing the time domain resource scheduling strategy.

In the present disclosure, the base station may determine in advance whether the UE supports the transmission time interval adjustment function, before acquiring the transmission configuration information for avoiding the occurrence of in-device interference, so as to avoid the waste of signaling overhead and the strategy adjustment time in case that the user device does not support this function, and ensure that the scheduling strategy adjusted by the base station can be implemented.

In the present disclosure, when adjusting the transmission interval, the base station may perform adjustment based on a preset basic information transmission unit, that is, an original transmission time interval, thereby improving acquisition efficiency and accuracy of transmission configuration information.

In the present disclosure, when the base station determines the transmission configuration information based on the original transmission time interval TTI, the target uplink transmission interval may be acquired at least by deriving the starting time, so that when the UE performs the uplink and downlink transmission simultaneously through the target working frequency range involved in the in-device interference, the interference from the uplink transmission to the user equipment receiving the downlink scheduling control information is avoided. On the basis of minimizing the information transmission amount, it can at least ensure that the UE can parse the received downlink data packet, so as to avoid the entire downlink data loss caused by the in-device interference.

In the present disclosure, when determining the transmission configuration information based on the original transmission time interval TTI, the base station can shorten the interval time on the basis that the starting time of the original transmission time interval remains unchanged, when shortening the uplink transmission interval at the same time, to determine the time range of the target downlink transmission interval, thereby further reducing the interference from the uplink transmission to the downlink transmission when the UE performs uplink and downlink transmissions simultaneously in the preset interference period.

In the present disclosure, when the base station determines the transmission configuration information based on the original transmission time interval TTI, the uplink transmission interval and the downlink transmission interval may be shortened at the same time, in this way, within the original transmission time interval, the time range of the target uplink transmission interval and the time range of the target downlink transmission interval do not coincide with each other, so that the UE completely avoids the interference from the uplink transmission to the downlink transmission when the uplink and downlink transmissions are simultaneously performed in the preset interference period, improving the information transmission performance of the 5G network, and thereby improving the user experience of the user equipment for the 5G network.

In the present disclosure, in the case that the base station determines in real time whether in-device interference occurs, if it is determined that in-device interference may occur, the transmission configuration information may be sent to the user equipment in a time before the interference is about to occur, for example, in the previous transmission time interval of the preset interference period. By doing so, the normal information transmission in the previous period will not be affected, and the occurrence of in-device interference can also be effectively prevented, thereby ensuring the information transmission performance.

In the present disclosure, in the case that the base station determines whether in-device interference occurs according to the radio frequency support capability information of the user equipment, the base station may in advance shorten the transmission time interval according to the preset strategy after the user equipment accesses the network, and perform transmission by taking the shortened transmission time interval as the basic information transmission unit before the in-device interference is about to occur. By doing so, when the in-device interference is about to occur, the in-device interference can be quickly avoided by canceling the transmission interval. The control signaling for canceling the transmission may be a simple switch signal, which can save the signaling overhead.

In the present disclosure, in the case that the base station changes the transmission time interval in advance, when determining the target transmission interval, the base station may divide the original transmission time interval into a preset number of target transmission intervals and determine the divided time range as the target transmission interval, and each of the transmission intervals in the original transmission interval period may be numbered. By doing so, when determining the second transmission configuration information, the base station only needs to inform UE of the serial number of the time interval that cancels the transmission in the control signaling, thereby saving signaling overhead.

It should be understood that the above general description and the following detailed description are merely exemplary and explanatory, which cannot limit to the present disclosure.

### BRIEF DESCRIPTION OF THE DRAWINGS

The attached drawings herein are incorporated into the specification and form a part of the specification, showing embodiments consistent with the disclosure and used together with the specification to explain the principles of the disclosure.

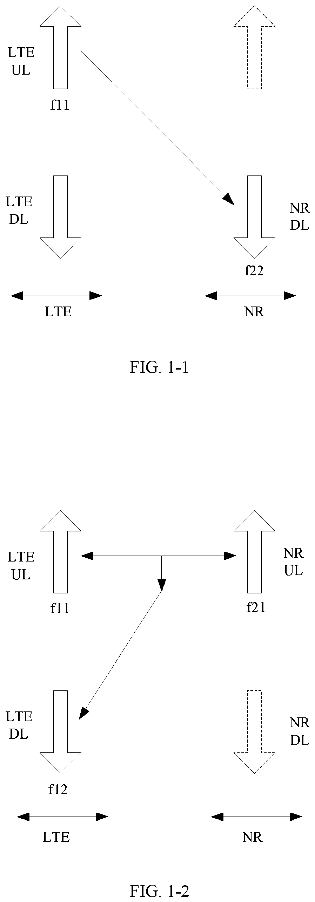

FIG. 1-1 is a schematic diagram of a harmonic interference, according to an exemplary embodiment.
FIG. 1-2 is a schematic diagram of an intermodulation interference, according to an exemplary embodiment.
FIG. 2 is a flowchart of an information transmission method according to an exemplary embodiment.
FIG. 3 is a flowchart of another information transmission method according to an exemplary embodiment.
FIG. 4 is a flowchart of another information transmission method according to an exemplary embodiment.
FIG. 5-1 is a schematic diagram of an information transmission according to an exemplary embodiment of the present disclosure.
FIG. 5-2 is a schematic diagram of another information transmission according to an exemplary embodiment of the present disclosure.
FIG. 5-3 is a schematic diagram of another information transmission according to an exemplary embodiment of the present disclosure.
FIG. 5-4 is a schematic diagram of another information transmission according to an exemplary embodiment of the present disclosure.
FIG. 6 is a flowchart of another information transmission method according to an exemplary embodiment.
FIG. 7 is a flowchart of another information transmission method according to an exemplary embodiment.
FIG. 8 is a schematic diagram of an in-device interference, according to an exemplary embodiment.
FIG. 9-1 is a flowchart of another information transmission method according to an exemplary embodiment.
FIG. 9-2 is a schematic diagram of an information transmission according to an exemplary embodiment of the present disclosure.
FIG. 9-3 is a flowchart of another information transmission method according to an exemplary embodiment.
FIG. 9-4 is a schematic diagram of another information transmission according to an exemplary embodiment of the present disclosure.
FIG. 10-1 is a flowchart of another information transmission method according to an exemplary embodiment.
FIG. 10-2 is a schematic diagram of another information transmission according to an exemplary embodiment of the present disclosure.
FIG. 10-3 is a schematic diagram of another information transmission according to an exemplary embodiment of the present disclosure.
FIG. 11 is a flowchart of another information transmission method according to an exemplary embodiment.
FIG. 12-1 is a schematic diagram of an information transmission according to an exemplary embodiment of the present disclosure.
FIG. 12-2 is a schematic diagram of another information transmission according to an exemplary embodiment of the present disclosure.
FIG. 13-1 is a flowchart of another information transmission method according to an exemplary embodiment.
FIG. 13-2 is a flowchart of another information transmission method according to an exemplary embodiment.
FIG. 14 is a flowchart of an information transmission method according to an exemplary embodiment.
FIG. 15 is a flowchart of another information transmission method according to an exemplary embodiment.
FIG. 16 is a flowchart of another information transmission method according to an exemplary embodiment.
FIG. 17 is a flowchart of another information transmission method according to an exemplary embodiment.
FIG. 18 is a block diagram of an information transmission device according to an exemplary embodiment of the present disclosure.
FIG. 19 is a block diagram of another information transmission device according to an exemplary embodiment of the present disclosure.
FIG. 20 is a block diagram of another information transmission device according to an exemplary embodiment of the present disclosure.
FIG. 21 is a block diagram of another information transmission device according to an exemplary embodiment of the present disclosure.
FIG. 22 is a block diagram of another information transmission device according to an exemplary embodiment of the present disclosure.
FIG. 23 is a block diagram of another information transmission device according to an exemplary embodiment of the present disclosure.
FIG. 24 is a block diagram of another information transmission device according to an exemplary embodiment of the present disclosure.
FIG. 25 is a block diagram of another information transmission device according to an exemplary embodiment of the present disclosure.
FIG. 26 is a block diagram of another information transmission device according to an exemplary embodiment of the present disclosure.
FIG. 27 is a block diagram of another information transmission device according to an exemplary embodiment of the present disclosure.
FIG. 28 is a block diagram of another information transmission device according to an exemplary embodiment of the present disclosure.
FIG. 29 is a block diagram of an information transmission device according to an exemplary embodiment of the present disclosure.
FIG. 30 is a block diagram of another information transmission device according to an exemplary embodiment of the present disclosure.
FIG. 31 is a block diagram of another information transmission device according to an exemplary embodiment of the present disclosure.
FIG. 32 is a block diagram of another information transmission device according to an exemplary embodiment of the present disclosure.
FIG. 33 is a schematic structural diagram of an information transmission device according to an exemplary embodiment of the present disclosure.
FIG. 34 is a schematic structural diagram of another information transmission device according to an exemplary embodiment of the present disclosure.

### DETAILED DESCRIPTION

Exemplary embodiments will be described in detail herein, examples of which are illustrated in the accompanying drawings. The following description refers to the same or similar elements in the different figures unless otherwise indicated. The implementations described in the following exemplary embodiments do not represent all implementations consistent with the present disclosure. Instead, they are merely examples of devices and methods consistent with aspects of the disclosure as detailed in the appended claims.

The execution subject of the present disclosure includes: a base station and user equipment (UE), wherein the base station may be a base station, a sub base station, or the like provided with large-scale antenna arrays. The user equipment UE may be a user terminal, a user node, a mobile terminal, a tablet or the like. In a specific implementation process, the base station and the user equipment are independent of each other, and are also in contact with each other, to jointly implement the technical solution provided by the present disclosure.

In the embodiment of the present disclosure, radio frequency transceiver units with different network types may be disposed in the UE, for example, an LTE radio frequency transceiver unit of 4G network and an NR radio frequency transceiver unit of 5G network. The working frequency of the LTE radio frequency transceiver unit is in the range of the network frequency of the 4G network, for example, in the range of 1.7 GHz to 1.8 GHz. The working frequency of the NR radio frequency transceiver unit is, for example, in the range of 3.4 GHz to 4.2 GHz or higher frequency range, such as a frequency range higher than 6 GHz.

The above-mentioned in-device interference occurring in the UE includes: harmonic interference and intermodulation interference. The cause of harmonic interference may be that the octave range of an LTE uplink working frequency range f11 coincides with the NR downlink working frequency range f22, as shown in FIG. 1-1; or, it may be that an octave range of the NR uplink working frequency range coincides with another NR downlink working frequency range. That is to say, the harmonic interference is not limited to be generated when the LTE-NR interoperates, it may also be the interference phenomenon when the UE performs NR-NR interoperation.

With respect to intermodulation interference, intermodulation interference occurs when the combined frequency range of two or more uplink working frequency ranges coincides with a downlink working frequency range. Exemplarily, as shown in FIG. 1-2, when the uplink working frequency range f11 of LTE and the uplink working frequency range f21 of NR are simultaneously performing uplink transmission, the combined frequency range of f11 and f21 coincides with one downlink working frequency range f12 of LTE that is performing downlink transmission, which causes intermodulation interference in the UE. Similarly, the occurrence of intermodulation interference is not limited to be generated when the LTE-NR interoperates.

Based on this, the present disclosure provides an information transmission method for reducing or preventing the in-device interference when the user equipment simultaneously transmits uplink and downlink information at the same time.

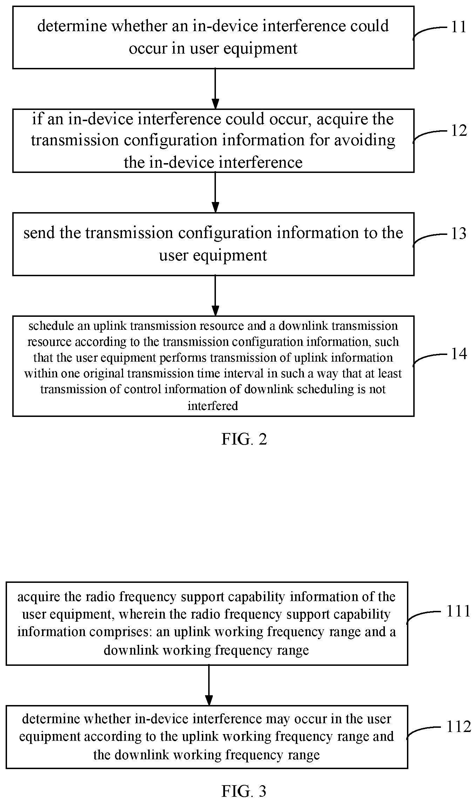

Referring to FIG. 2, it shows a flowchart of an information transmission method according to an exemplary embodiment, which is applied in a base station. The method may include the following steps.

In step 11, it is determined whether in-device interference may occur in user equipment, that is, it is determined whether an in-device interference may occur in user equipment.

According to the timing of determining that in-device interference may occur in the UE, the following two cases may be included.

In the first case, after the UE accesses the network, it is determined whether the in-device interference may occur in the user equipment according to the acquired radio frequency support capability of the user equipment.

Referring to FIG. 3, it shows a flowchart of another information transmission method according to an exemplary embodiment. The above step 11 may include following steps.

In step 111, radio frequency support capability information of the user equipment is acquired, wherein the radio frequency support capability information includes: an uplink working frequency range and a downlink working frequency range.

At least two uplink working frequency ranges used for transmitting uplink information are determined and at least two downlink working frequency ranges used for receiving downlink information are determined according to different working frequency ranges supported by the user equipment. According to different duplex modes of the information transmission, an uplink working frequency range of the UE may be the same as a downlink working frequency range. For example, in the above FIG. 1-1, the LTE radio frequency transceiver unit works in the LTE-TDD mode, and the uplink working frequency range LTE UL and downlink working frequency range LTE DL can be same frequency range.

In step 112, it is determined whether in-device interference may occur in user equipment according to the uplink working frequency range and the downlink working frequency range.

According to different types of the in-device interference, the implementation of step 112 includes two manners.

In the first manner, according to an uplink working frequency range and a downlink working frequency range, it is determined whether harmonic interference may occur in the user equipment according to the harmonic interference condition. In the embodiment, the harmonic interference condition is: the octave range of the uplink working frequency range coincides with the downlink working frequency range to a certain degree.

In the second manner, according to at least two uplink working frequency ranges and a downlink working frequency range, it is determined whether intermodulation interference may occur in the user equipment according to the preset intermodulation interference condition. In the embodiment, the intermodulation interference condition is: the combined frequency range of the at least two uplink working frequency ranges coincides with the downlink working frequency range to a certain degree.

In the embodiment of the present disclosure, the base station may determine in advance whether the in-device interference occurs when the UE performs the uplink and downlink transmission simultaneously, according to the acquired radio frequency support capability of the user equipment, that is, the uplink working frequency range and the downlink working frequency range of the user equipment, so as to be prepared to adjust scheduling strategy in advance, and timely formulate the scheduling strategy for preventing the device interference from happening.

In the second case, according to the uplink scheduling request information and the downlink scheduling information of the user equipment, it is determined in real time whether an in-device interference may occur in the user equipment.

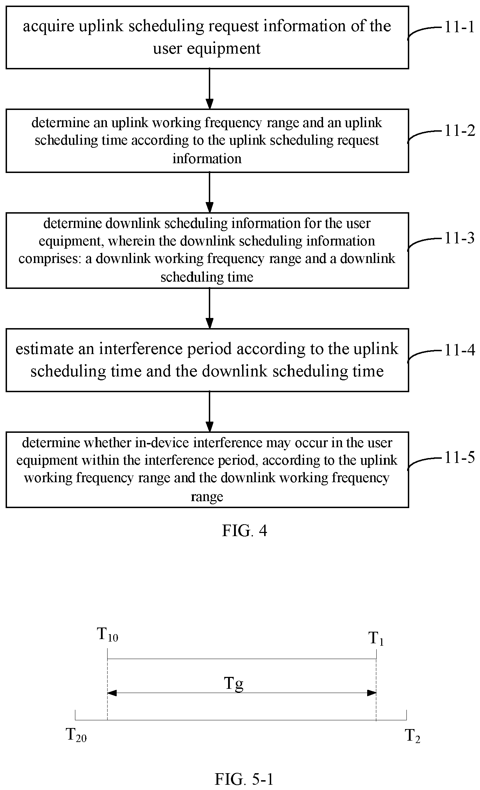

Referring to FIG. 4, it shows a flowchart of another information transmission method according to an exemplary embodiment. The above step 11 may include following steps.

In step 11-1, uplink scheduling request information of the user equipment is acquired.

The uplink scheduling request information sent by the UE is used to request the base station to allocate uplink transmission resources for the UE within the current uplink working frequency range.

The transmission resources in the present disclosure may be: PRB (Physical Resource Block) and MCS (Modulation and Coding Scheme). The PRB may refer to the resource of a time slot in the time domain.

In an embodiment of the present disclosure, the uplink scheduling request information may include: a cache report of the uplink data to be transmitted in the UE.

In step 11-2, an uplink working frequency range and an uplink scheduling time are determined according to the uplink scheduling request information.

After the UE accesses the network, the base station can acquire the radio frequency support capability of the UE, which includes the uplink working frequency range supported by the UE. When the UE sends an uplink scheduling request to the base station, the base station can determine the current uplink working frequency range of the UE.

After receiving the uplink scheduling request of the UE, the uplink scheduler in the base station may perform a scheduling result according to the uplink scheduling request of the UE and the uplink channel condition directly measured by the base station, such as an uplink CQI (Channel Quality Indicator). The scheduling result includes an uplink scheduling time. The uplink scheduling time at least includes: a starting time of the uplink scheduling, that is, a starting position of the uplink time domain resource configured by the base station for the UE, which may also be referred to as a starting time of the uplink transmission interval.

In another embodiment of the present disclosure, if the uplink scheduling request sent by the UE includes a cache report of the uplink data to be transmitted, the base station may further determine, according to the cache report of the uplink data to be transmitted, how many time domain resources need to be configured for the uplink data to be transmitted. If the time domain resource is calculated in units of the original TTI (Transmission Time Interval), the time domain resources needed by the uplink data to be transmitted may be represented by: the number of uplink original TTIs. Then, the above scheduling result further includes: the number of time domain resources to be configured, that is, the uplink scheduling duration.

Accordingly, the uplink scheduling time may include: a starting time of the uplink transmission resource and an uplink scheduling duration that the base station plans to configure for the UE.

In the step 11-3, downlink scheduling information for the user equipment is determined. In the embodiment, the downlink scheduling information includes: a downlink working frequency range and a downlink scheduling time.

The base station determines downlink scheduling information for the UE, wherein the downlink scheduling information includes: a downlink working frequency range and a downlink scheduling time. The downlink scheduling time is a time that the base station plans to send downlink data to the UE through the downlink working frequency range, and may include: a starting time of downlink scheduling and a downlink scheduling duration.

In step 11-4, an interference period is estimated according to the uplink scheduling time and the downlink scheduling time.

It is assumed that the base station responds to the uplink scheduling request of the UE and plans to grant the UE to perform uplink transmission in the time range of T10-T1, and plans to transmit downlink information to the UE in the time range of T20-T2.

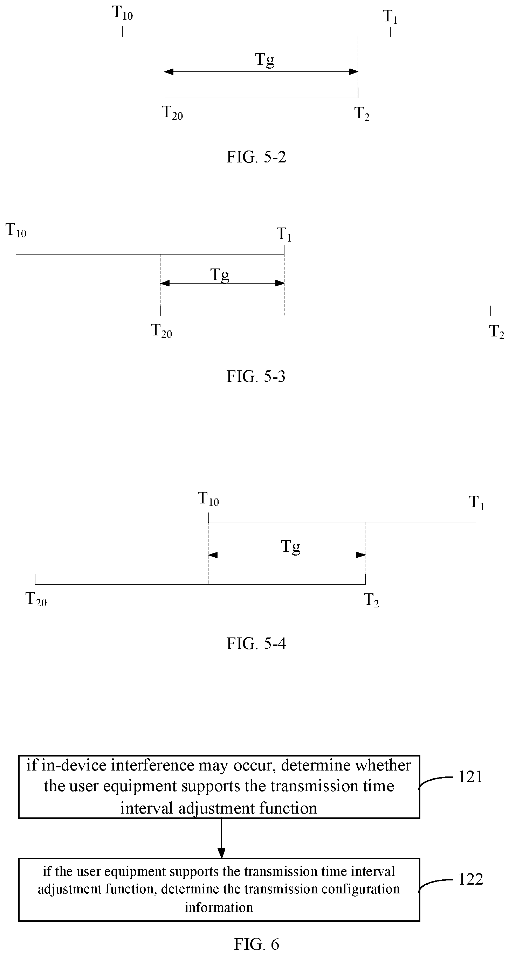

Referring to the schematic diagrams of determining the interference period shown in FIGs. 5-1-5-4, in the present disclosure, the above estimated interference period may include the following four cases.

A first case: as shown in FIG. 5-1, the uplink scheduling time T10-T1 is within the downlink scheduling time T20-T2, then the interference time period Tg is estimated as: T10-T1.

A second case: as shown in FIG. 5-2, the downlink scheduling time T20-T2 is within the uplink scheduling time T10-T1, then the interference time period Tg is estimated as: T20-T2.

A third case: as shown in FIG. 5-3, the uplink scheduling time T10-T1 partially coincides with the downlink scheduling time T20-T2, then the interference time period Tg is estimated as: T20-T1.

A fourth case: as shown in FIG. 5-4, the uplink scheduling time T10-T1 partially coincides with the downlink scheduling time T20-T2, then the interference time period Tg is estimated as: T10-T2.

In step 11-5, it is determined whether in-device interference may occur in the user equipment within the interference period, according to the uplink working frequency range and the downlink working frequency range.

Similarly, in step 11-5, the two manners described in the above step 112 may also be used to determine whether in-device interference may occur in the UE.

After the estimated interference period is determined, if the base station still performs time domain resource scheduling according to the normal scheduling mode during the above interference period, it will cause the in-device interference occurring in the UE. The uplink and downlink scheduling strategies need to be adjusted to avoid generating in-device interference.

In the embodiment of the present disclosure, the base station may determine in real time whether device interference may occur, according to the uplink scheduling request of the UE, so that the transmission configuration information used to avoid the in-device interference may be sent to the user equipment in a time before the interference is about to occur, such as in the previous original TTI, and the scheduling strategy is changed in time, to avoid the occurrence of device interference in real time, improving the effectiveness of information transmission.

Although the base station can determine that in-device interference may occur during the estimated interference period described above, if the UE itself has a strategy to avoid in-device interference, the base station does not need to adjust the uplink and downlink scheduling strategy to avoid the in-device interference in UE from the base station side.

Therefore, in another embodiment of the present disclosure, before adjusting the uplink and downlink scheduling strategy, the base station may further determine whether the UE itself has a preset interference avoidance setting, wherein the preset interference avoidance setting is used to avoid the occurrence of the in-device interference through the operation of the user equipment itself. The preset interference avoidance setting may be: when the in-device interference occurs, the preset operation is triggered to stop the information transmission of at least one working frequency range involved in the in-device interference.

In the user equipment, the preset interference avoidance setting may be set by presetting a user operation interface. For example, the user operation interface may be a network communication module for controlling a certain working frequency range, such as the switch control of the LTE SIM card or NR SIM card. When in-device interference occurs, the user can operate the switch control to turn off the communication module involved in the in-device interference. In another embodiment of the present disclosure, the preset interference avoidance setting may also be a setting that is automatically triggered when the UE detects the occurrence of in-device interference.

In an embodiment of the present disclosure, the base station may acquire the avoidance setting detection report of the UE, wherein the avoidance setting detection report is used to report whether the UE performs the above preset interference avoidance setting.

If the above avoidance setting detection report indicates that the preset interference avoidance setting is performed in the UE, the base station may determine that the in-device interference is unlikely to occur, and further determine that the uplink and downlink scheduling strategy does not need to be adjusted within the interference period, thereby avoiding the increase in computational burden and signaling overhead due to the scheduling adjustment.

If the above avoidance setting detection report indicates that the preset interference avoidance setting is not performed in the UE, the base station may determine that in-device interference may occur, and the base station needs to adjust the uplink and downlink scheduling strategy before the interference period arrives.

In the embodiment of the present disclosure, before performing the resource scheduling for avoiding the in-device interference, the base station may first determine whether the user equipment itself has the setting for avoiding the in-device interference. After determining that the user equipment does not have the ability to avoid the in-device interference, the base station may effectively avoid the in-device interference through the manner of changing the time domain resource scheduling strategy.

In the step 12, if it is determined that the in-device interference may occur, the transmission configuration information for avoiding the in-device interference is acquired, wherein the transmission configuration information includes: an adjustment parameter of the transmission time interval.

In the embodiment of the present disclosure, after determining that in-device interference may occur in the UE, the base station may reduce or avoid in-device interference within the estimated interference period Tg by adjusting the transmission interval.

Referring to FIG. 6, it shows a flowchart of another information transmission method according to an exemplary embodiment. The above step 12 may include following steps.

In step 121, if in-device interference may occur, it is determined whether the user equipment supports a transmission time interval adjustment function.

Considering that some user equipment may not support the transmission interval adjustment function, in the embodiment of the present disclosure, before the acquisition of the configuration information, it may be first determined whether the UE supports the transmission time interval adjustment function, in order to ensure that the adjustment of the uplink and downlink scheduling strategy performed by the base station can be supported by the UE.

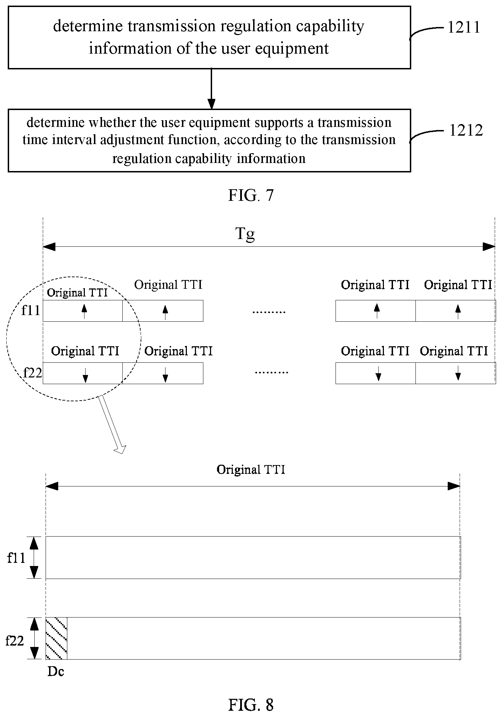

Referring to FIG. 7, it shows a flowchart of another information transmission method according to an exemplary embodiment. The above step 12 may include following steps.

In step 1211, transmission regulation capability information of the user equipment is determined.

The transmission regulation capability information of the UE is used to indicate whether the UE has the capability of adaptively transmitting information to apply to a change of the base station scheduling strategy.

In an embodiment of the present disclosure, the transmission regulation capability information of the UE may be determined by using at least two following manners.

In a first manner, the base station may send preset control signaling to the UE, and request the UE to report its own transmission regulation capability information.

In a second manner, the base station may query the preset list according to the device information of the user equipment, such as the identity identifier and the device type such as the unified classification information (category) or the like, to determine the transmission regulation capability information of the UE. The preset list may include: a corresponding relationship between device information of the user equipment and transmission regulation capability information.

In step 1212, it is determined, according to the transmission regulation capability information, whether the user equipment supports the transmission time interval adjustment function.

In the present disclosure, the above transmission time interval adjustment function indicates whether the UE can transmit uplink data by using a part of time domain resources in an original TTI in one transmission time interval, and acquire downlink data from a part of time domain resources of an original TTI.

Taking the current UE being a smart phone A as an example, if the transmission regulation capability information of the smart phone A indicates that the transmission time interval adjustment function is not supported, the process ends. Otherwise, if the transmission regulation capability information of the smartphone A indicates that the transmission time interval adjustment function is supported, the following step 122 is performed.

In step 122, if the user equipment supports the transmission time interval adjustment function, the transmission configuration information is determined.

In the present disclosure, the above transmission configuration information is information used for indicating adjustment of uplink and downlink scheduling.

In the embodiment of the present disclosure, the base station may determine, in advance, whether the UE supports the transmission time interval adjustment function, for example, determine whether the UE supports the transmission interval adjustment function by using the regulation capability information of the UE, before acquiring the transmission configuration information for avoiding the occurrence of in-device interference. By doing so, it may avoid the waste of signaling overhead and the strategy adjustment time due to the user device not supporting this function, so as to ensure that the scheduling strategy adjusted by the base station can be effectively implemented by the UE, thereby avoiding the occurrence of in-device interference.

In the present disclosure, if the base station performs uplink and downlink scheduling in the estimated interference period according to the original scheduling strategy, the in-device interference may occur. In the embodiment, the original scheduling strategy refers to that the base station performs the time domain resource configuration with the original TTI as the basic transmission unit in the target uplink working frequency range and the target downlink operating frequency range.

Illustratively, taking that the harmonic interference may occur in FIG. 1-1 as an example, FIG. 8 shows the original scheduling mode that causes harmonic interference. As shown in FIG. 8, if the base station still uses the original TTI as the basic transmission unit in the estimated interference period Tg, the uplink transmission resource is configured in the uplink working frequency range f11 of the UE, and the downlink transmission resource is configured in the downlink working frequency range f22, then, when the UE performs uplink transmission by using the uplink time domain resource of f11 and simultaneously receives downlink data by using the downlink time domain resource of f22, harmonic interference will occur within the Tg.

The lower diagram in FIG. 8 takes the scheduling of the original TTI as an example, showing an enlarged schematic diagram of the scheduling that causes in-device interference. It can be seen that, when the UE performs uplink transmission at the target uplink working frequency f11 according to the original scheduling mode, the process of receiving the downlink information through the target downlink working frequency range f22 performed by UE may be interfered, and in particular, the process of receiving the downlink scheduling control information Dc performed by UE may be interfered. Because the downlink scheduling control information Dc is used to notify the UE of sending downlink data information to the UE in what time domain resource block, with what modulation coding scheme, and under what MIMO operation mode, if transmission of the downlink scheduling control information Dc is interfered, the UE will be unable to parse the downlink scheduling control information Dc, and thereby causing the UE cannot acquire downlink data.

In view of the importance of the downlink scheduling control information Dc, in the present disclosure, it should at least ensure that transmission of the downlink scheduling control information Dc is not interfered when adjusting the uplink and downlink transmission intervals to avoid interference. In the present disclosure, corresponding to the two cases implemented in the above step 11, the process of acquiring transmission configuration information in step 12 may also include two cases.

The first case corresponds to the second case of the above step 11. In the embodiment of the present disclosure, by adopting at least following three manners, the transmission interval during the uplink and downlink scheduling may be adjusted based on the original TTI and the transmission configuration information may be determined.

The first manner: shortening the uplink transmission interval based on the original TTI

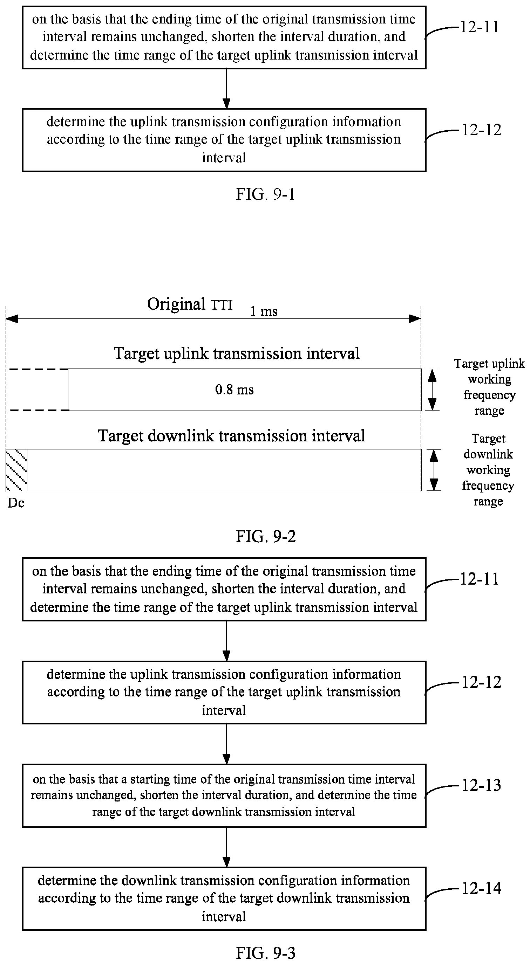

Referring to FIG. 9-1, it shows a flowchart of another information transmission method according to an exemplary embodiment. The above step 12 may include following steps.

In step 12-11, on the basis that the ending time of the original transmission time interval remains unchanged, the interval duration is shortened, and the time range of the target uplink transmission interval is determined.

Referring to 9-2, it shows a schematic diagram of resource scheduling according to an exemplary embodiment. At the time of allocating time domain resources to a target uplink working frequency range, on the basis of the original TTI, the starting time is postponed, and the time range of the target uplink transmission interval is determined.

Assuming that the original TTI is 1 ms and includes 10 subframes with sequence numbers 0 to 9, and the interval of the target uplink transmission interval after changing the interval duration is 0.8 ms, then, in the present disclosure, when configuring the uplink transmission interval, the first 0.2 ms of the original TTI, that is, subframes 0 and 1, may be configured as blank subframes, and uplink time domain resources are configured from the subframe 2, and then the target uplink transmission interval is in the range of 2 to 9 subframes.

In step 12-12, the uplink transmission configuration information is determined according to the time range of the target uplink transmission interval.

The above uplink transmission configuration information may include: a starting time of the target uplink transmission interval, for example, a subframe number 2 corresponding to the starting time, and may further include: an ending time and an interval duration.

As shown in FIG. 9-2, the configuration of the target uplink transmission interval in the embodiment of the present disclosure can at least ensure that the downlink scheduling control information Dc is not interfered during the downlink scheduling for the target downlink working frequency range. Regarding the data that may be interfered in the downlink transmission, a retransmission may be requested subsequently.

In the embodiment of the present disclosure, when the base station determines the transmission configuration information based on the original transmission time interval TTI, the target uplink transmission interval may be acquired by deriving the starting time, so that when the UE performs the uplink and downlink transmission simultaneously through the target working frequency range involved in the in-device interference, the interference from the uplink transmission to the user equipment receiving the downlink scheduling control information is avoided. On the basis of minimizing the information transmission amount, it can at least ensure that the UE can parse the received downlink data packet, so as to avoid the entire downlink data loss caused by the in-device interference.

The second manner: shortening the uplink transmission interval and downlink transmission interval respectively based on the original TTI

Referring to FIG. 9-3, it shows a flowchart of another information transmission method according to an exemplary embodiment. On the basis of FIG. 9-1, the above step 12 may further include following steps.

In step 12-13, on the basis that the starting time of the original transmission time interval remains unchanged, the interval duration is shortened, and the time range of the target downlink transmission interval is determined.

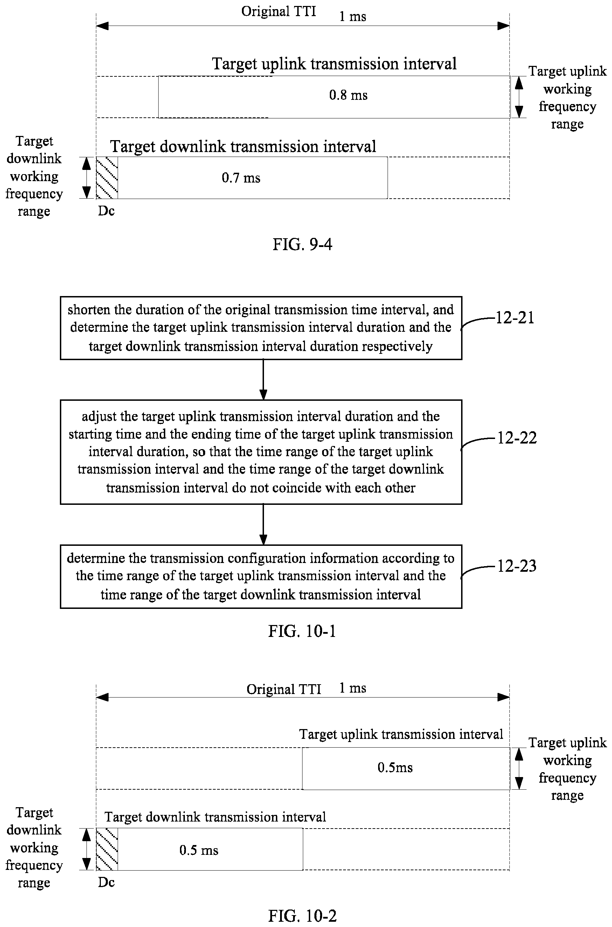

Referring to FIG. 9-4, it shows a schematic diagram of another resource scheduling according to an exemplary embodiment. On the basis of FIG. 9-2, when time domain resources are allocated for the target downlink working frequency range, the ending time of the transmission interval may be changed based on the original TTI, and the time range of the target downlink transmission interval is determined.

In step 12-14, the downlink transmission configuration information is determined according to the time range of the target downlink transmission interval.

In the embodiment of the present disclosure, the above downlink transmission configuration information at least includes: an ending time of the target downlink transmission interval, and may further include: a starting time and an interval duration.

Still taking the frame structure of the original TTI as an example, if the target downlink transmission interval in FIG. 9-4 is 0.7 ms, the ending time of the target downlink transmission interval corresponds to the ending position of the subframe 6, that is, the time range of the target downlink transmission interval can be represented as: 0-6 subframes.

In an embodiment, the downlink transmission configuration information may include: an ending position of the downlink transmission interval in the original TTI, for example, a subframe number 6.

Compared with FIG. 9-2, by using the scheduling manner provided by the embodiment of the present disclosure, the interference from the uplink transmission to the downlink information transmission of the UE may be further reduced during the interference period. That is, in FIG. 9-2, the interference lasts for 0.8 ms, and in FIG. 9-4, the interference to the downlink transmission data is reduced to 0.5 ms.

In the present disclosure, when determining the transmission configuration information based on the original transmission time interval TTI, the base station can shorten the interval time on the basis that the starting time of the original transmission time interval remains unchanged, when shortening the uplink transmission interval at the same time, to determine the time range of the target downlink transmission interval, thereby further reducing the interference from the uplink transmission to the downlink transmission when the UE performs uplink and downlink transmissions simultaneously in the preset interference period.

In the third manner, on the basis of the second manner, the uplink transmission interval and the downlink transmission interval are respectively shortened based on the original TTI, so that the time range of the target uplink transmission interval does not coincide with the time range of the target downlink transmission interval.

Referring to FIG. 10-1, it shows a flowchart of another information transmission method according to an exemplary embodiment. The above step 12 may include following steps.

In step 12-21, the duration of the original transmission time interval is shortened, and the target uplink transmission interval duration and the target downlink transmission interval duration are determined respectively.

The interval durations may be shortened respectively based on the original TTI, and the target uplink transmission interval duration and the target downlink transmission interval duration are determined, for example, 0.5 ms respectively.

In step 12-22, the target uplink transmission interval duration and the starting time and the ending time of the target uplink transmission interval duration are adjusted, so that the time range of the target uplink transmission interval and the time range of the target downlink transmission interval do not coincide with each other.

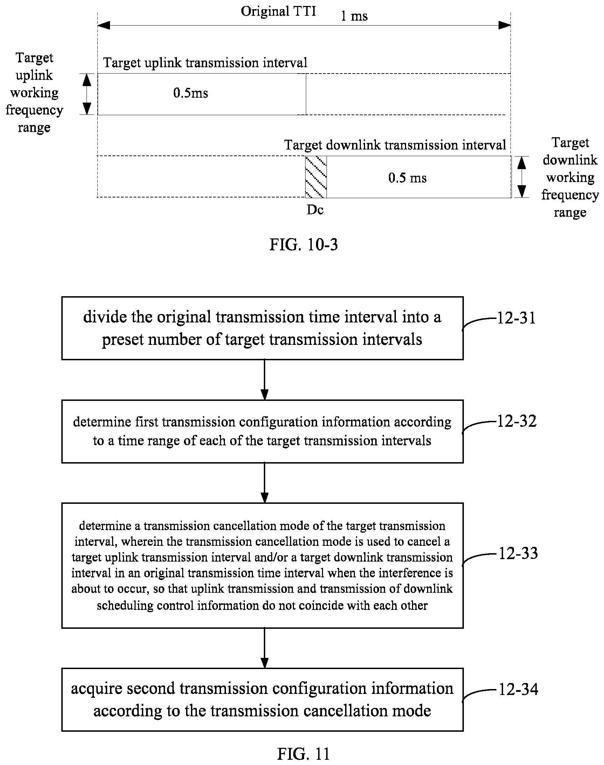

Referring to FIG. 10-2 and FIG. 10-3, they show schematic diagrams of another resource scheduling according to an exemplary embodiment. In the embodiment of the present disclosure, an endpoint time of a target uplink transmission interval and a target downlink transmission interval may be adjusted, so that the time ranges of the target uplink transmission interval and the target downlink transmission interval do not coincide with each other in an original TTI, thus completely avoiding in-device interference.

In step 12-23, the transmission configuration information is determined according to the time range of the target uplink transmission interval and the time range of the target downlink transmission interval.

In the embodiment of the present disclosure, the above transmission configuration information includes: an endpoint time of the target uplink transmission interval and an endpoint time of the target downlink transmission interval. To save the signaling overhead, the above transmission configuration information may include: one endpoint time of each target transmission interval. For example, in FIG. 10-2, the transmission configuration information may include: an ending subframe 4 of the target uplink transmission interval; a starting subframe 5 of the target downlink transmission interval.

In the embodiment of the present disclosure, when the base station determines the transmission configuration information based on the original transmission time interval TTI, the uplink transmission interval and the downlink transmission interval may be shortened at the same time, in this way, within the original transmission time interval, the time range of the target uplink transmission interval and the time range of the target downlink transmission interval do not coincide with each other, so that the UE completely avoids the interference from the uplink transmission to the downlink transmission when the uplink and downlink transmissions are simultaneously performed in the preset interference period, improving the information transmission performance of the 5G network, and thereby improving the user experience of the user equipment for the 5G network.

It can be seen that, in the embodiment of the present disclosure, the uplink and downlink transmission intervals are adjusted based on the original TTI, and different time domain resources are allocated for different frequency ranges involved in the in-device interference, so that the uplink transmission performed by the UE in the same original time interval is at least not performed at the same time when the downlink control information is transmitted, which avoids the interference from the uplink transmission to the downlink transmission from the aspect of time, improving the acquisition efficiency and accuracy of the transmission configuration information.

The second case corresponds to the first case of step 11. In the embodiment of the present disclosure, if it determines that in-device interference may occur in the UE after the UE accesses the network, the base station may schedule the uplink time domain resources and downlink time domain resources by adopting the transmission interval shorter than the original TTI as soon as the UE accesses the network. For the process of the base station acquiring the transmission configuration information, reference may be made to FIG. 11, which shows a flowchart of another information transmission method according to an exemplary embodiment. The above step 12 may include following steps.

In step 12-31, the original transmission time interval is divided into a preset number of target transmission intervals.

In the embodiment of the present disclosure, the base station may divide the original TTI into a preset number of transmission intervals, and take one interval time after the division as one target transmission interval.

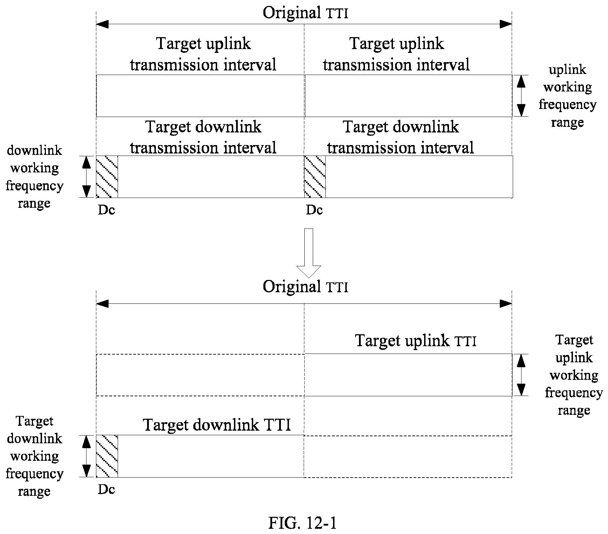

Exemplarily, assuming that one original TTI is 1 ms, the original TTI can be equally divided into two, and a target transmission interval of 0.5 ms is acquired, as shown in the upper diagram of FIG. 12-1.

It should be noted that, in the embodiment of the present disclosure, the original TTI may be divided according to different values, to acquire the target uplink transmission interval and the target downlink transmission interval respectively.

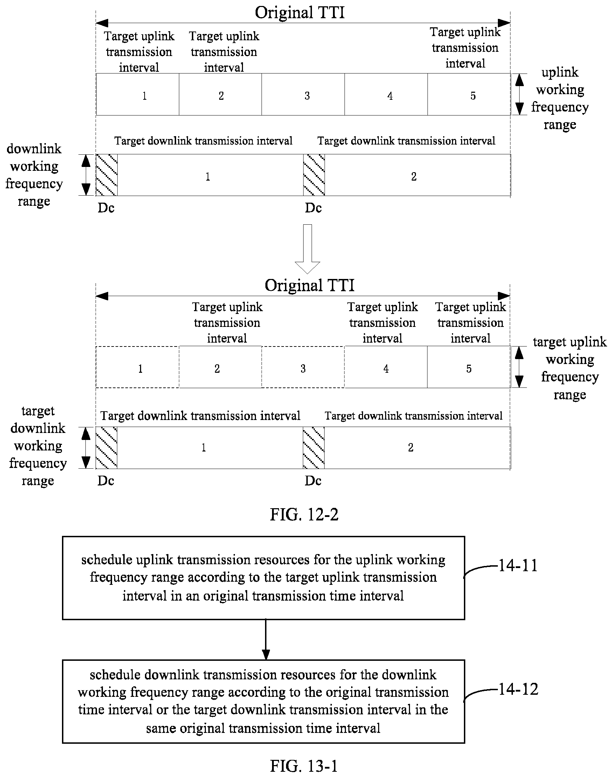

For example, as shown in the lower figure in FIG. 12-2, when the target uplink transmission interval is determined, one original TTI is divided into five, and one target uplink transmission interval is 0.2 ms; and when the target downlink transmission interval is determined, one original TTI is divided into two, and one target downlink transmission interval is 0.5 ms.

In step 12-32, first transmission configuration information is determined according to the time range of the target transmission interval.

The above first transmission configuration information may include: an endpoint time and a duration of each target transmission interval. In another embodiment of the present disclosure, if the UE knows the original TTI information, the above first transmission configuration information may further include: a value indicating that the original TTI is equally divided. Assuming that the value is 2, after acquiring this value, the UE can determine that the base station performs time domain resource scheduling by taking the 1/2 duration of the original TTI as the basic transmission unit, which can reduce the information amount of the control signaling and save radio resources.

In step 12-33, a transmission cancellation mode of the target transmission interval is determined, wherein the transmission cancellation mode is used to cancel the target uplink transmission interval and/or the target downlink transmission interval in an original transmission time interval when the interference is about to occur, so that uplink transmission and transmission of downlink scheduling control information do not coincide with each other.

As shown in the lower figure in FIG. 12-1, during the estimated interference period, the transmission interval of the target working frequency range involved in the in-device interference is cancelled. That is, in the interference period Tg, the uplink transmission corresponding to the first target transmission interval in an original TTI can be cancelled, and in the target downlink working frequency range, the downlink transmission of the second target downlink transmission interval in the original TTI can be cancelled, so that the uplink transmission and the downlink transmission do not coincide at all in the same original TTI, thereby avoiding the interference.

In the present disclosure, in the case that the base station determines whether in-device interference occurs according to the radio frequency support capability information of the user equipment, the base station may in advance shorten the transmission time interval according to the preset strategy after the user equipment accesses the network, and perform transmission by taking the shortened transmission time interval as the basic information transmission unit before the in-device interference is about to occur. By doing so, when the in-device interference is about to occur, the in-device interference can be quickly avoided by canceling the transmission interval. The control signaling for canceling the transmission may be a simple switch signal, which can save the signaling overhead.

Of course, in another embodiment of the present disclosure, the preset cancel transmission mode may also be adopted to reduce interference occurrence, as shown in the lower figure in FIG. 12-2.

The above transmission cancellation mode may be for cancelling the scheduling of time domain resources or scheduling blank subframes. The cancel transmission mode of scheduling blank subframes can prevent the UE from inefficiently acquiring information due to continuous attempting blind detection and measurement, thus improving the data transmission efficiency.

In step 12-34, second transmission configuration information is acquired according to the transmission cancellation mode.

In the embodiment of the present disclosure, the second transmission configuration information may be a serial number of the transmission interval for which scheduling of time domain resources is cancelled. For example, as shown in FIG. 12-2, if the second transmission configuration information includes: uplink transmission interval numbers 1 and 3 whose transmission is cancelled, the UE is prevented from sending uplink information to the base station by using the uplink transmission intervals of numbers 1 and 3.

In the embodiment of the present disclosure, in the case that the base station changes the transmission time interval in advance, when determining the target transmission interval, the base station may divide the original transmission time interval into a preset number of target transmission intervals and determine the divided time range as the target transmission interval, and each of the transmission intervals in the original transmission interval period may be numbered. By doing so, when determining the second transmission configuration information, the base station only needs to inform UE of the serial number of the time interval that cancels the transmission in the control signaling, thereby saving signaling overhead.

In step 13, the transmission configuration information is sent to the user equipment.

In the present disclosure, the base station may load the transmission configuration information into the broadcast signaling, the upper layer RRC signaling, or the PDCCH (Physical Downlink Control Channel) signaling of the physical layer, and send the information to the user equipment.

Corresponding to step 12, in the present disclosure, step 13 also includes two implementing manners.

In a first implementation, the transmission configuration information acquired in the first case of step 12 is sent to the UE before the estimated interference period of the base station is about to arrive, so that the UE timely performs the sending and receiving of information according to the transmission configuration information, to minimize or avoid in-device interference.

In the present disclosure, in the case that the base station determines in real time whether in-device interference occurs, if it is determined that in-device interference may occur, the transmission configuration information may be sent to the user equipment in a time before the interference is about to occur, for example, in the previous transmission time interval of the preset interference period. By doing so, the normal information transmission in the previous period will not be affected, and the occurrence of in-device interference can also be effectively prevented, thereby ensuring the information transmission performance.

In a second implementation, the manner of the base station sending the transmission configuration information acquired in the second case of step 12 to the UE includes:
sending first transmission configuration information to the user equipment when the user equipment accesses the network;
sending second transmission configuration information to the user equipment before the interference is about to occur.

In the present disclosure, in the case that the base station determines whether in-device interference occurs according to the radio frequency support capability information of the user equipment, the base station may in advance shorten the transmission time interval according to the preset strategy after the user equipment accesses the network, and perform transmission by taking the shortened transmission time interval as the basic information transmission unit before the in-device interference is about to occur. By doing so, when the in-device interference is about to occur, the in-device interference can be quickly avoided by canceling the transmission interval. The control signaling for canceling the transmission may be a simple switch signal, which can save the signaling overhead.

In step 14, an uplink transmission resource and a downlink transmission resource are scheduled according to the transmission configuration information, such that the user equipment performs transmission of uplink information within an original transmission time interval in such a way that at least the transmission of downlink scheduling control information in the original transmission time interval is not interfered.

Corresponding to the two modes of acquiring the transmission configuration information in the above step 12, in the present disclosure, the implementation of step 14 also includes two cases.

In a first case, referring to FIG. 13-1, it shows a flowchart of another information transmission method according to an exemplary embodiment, the above step 14 may include:
in the step 14-11, scheduling uplink transmission resources for the uplink working frequency range according to the target uplink transmission interval in an original transmission time interval;
in the step 14-12, scheduling downlink transmission resources for the downlink working frequency range according to the original transmission time interval or the target downlink transmission interval in the same original transmission time interval.

It should be noted that the above two steps are in no particular order. Step 14-11 can be performed before, or after, or at the same time as step 14-12.

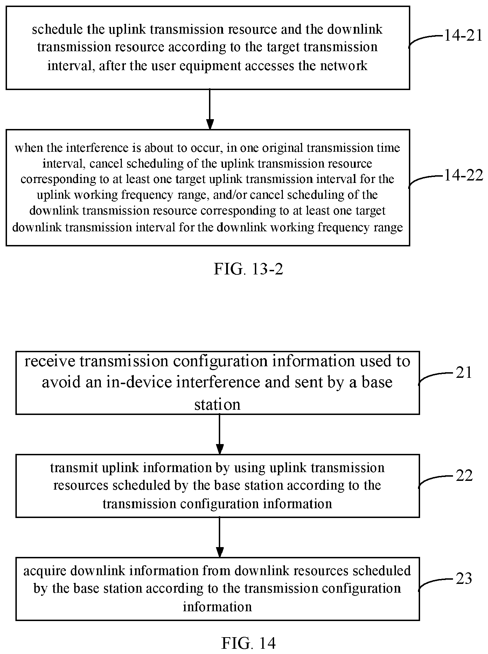

In a second case, referring to FIG. 13-2, it shows a flowchart of another information transmission method according to an exemplary embodiment, the above step 14 may include following steps.

In step 14-21, after the user equipment accesses the network, the uplink transmission resource and the downlink transmission resource are scheduled according to the target transmission interval.

As shown in the upper figure of FIG. 12-2, if the time range of the target uplink transmission interval is different from that of the target downlink transmission interval, the uplink time domain resources are configured for the target uplink working frequency range according to the target uplink transmission interval, and the downlink time domain resources are configured for the target downlink working frequency range of the UE according to the target downlink transmission interval to perform the downlink scheduling, respectively.

In the step 14-22, when the interference is about to occur, in an original transmission time interval, the scheduling of the uplink transmission resource corresponding to the at least one target uplink transmission interval for the uplink working frequency range is cancelled, and/or the scheduling of the downlink transmission resource corresponding to at least one target downlink transmission interval for the downlink working frequency range is cancelled.

When the base station determines that the in-device interference is about to occur in the target UE according to the uplink scheduling request of the UE, the resource configuration of the target uplink transmission interval of a specified location in an original TTI is cancelled and the resource configuration of the target downlink transmission interval of a specified location in an original TTI is cancelled according to the second transmission configuration information, to ensure that the uplink transmission of the UE through the target uplink working frequency range during the interference period does not interfere with the reception of the downlink scheduling control information on the target downlink working frequency range, as shown in the lower figure in FIG. 12-1.

Alternatively, a blank subframe is configured for the specified transmission interval, to instruct the UE not to perform information transmission at the specified transmission interval.

In summary, in the embodiment of the present disclosure, if the base station determines that the uplink and downlink transmission resources are allocated to the UE according to the preset resource scheduling mode, and the in-device interference may occur in the user equipment, the base station may adjust the resource scheduling strategy by changing the transmission time interval. In this way, when the user equipment uses the transmission resources scheduled by the base station to transmit information, the uplink transmission involved in the in-device interference is not performed simultaneously with the downlink transmission, thereby avoiding the occurrence of in-device interference, which at least prevents the uplink transmission of the UE from interfering UE receiving the downlink scheduling control information, thereby effectively avoiding the inability to parse the downlink data due to in-device interference, and improving the transmission performance of the 5G network system.

Correspondingly, the present disclosure further provides an information transmission method, which is applied in the user equipment. Referring to FIG. 14, it shows a flowchart of an information transmission method according to an exemplary embodiment. The method may include following steps.

In step 21, transmission configuration information from the base station to avoid the in-device interference is received, wherein the transmission configuration information includes: an adjustment parameter of a transmission time interval.

Corresponding to step 12 above, the transmission configuration information sent by the base station may be received, or the first transmission configuration information and the second transmission configuration information sent by the base station may be received respectively.

In step 22, the uplink information is transmitted by using the uplink transmission resource scheduled by the base station according to the transmission configuration information.

According to the starting time and the duration of the target uplink transmission interval indicated in the transmission configuration information, uplink information is sent to the base station by using the uplink time domain resource corresponding to the target uplink transmission interval.

In step 23, downlink information is acquired from the downlink resources scheduled by the base station according to the transmission configuration information.

Correspondingly, according to the time range of the target downlink transmission interval indicated in the transmission configuration information, downlink information sent by the base station is acquired by using the downlink time domain resource corresponding to the target downlink transmission interval.

In the information transmission method provided by the present disclosure, before the in-device interference occurs, the UE acquires the transmission configuration information sent by the base station to avoid the in-device interference, and performs the uplink and downlink transmissions in the time range corresponding to different transmission intervals in the same original TTI within the estimated interference period, according to the transmission configuration information, which at least ensures that the downlink control information sent by the base station is not received at the same time when the uplink information is sent, thereby preventing inability of UE to parse the downlink information due to in-device interference, improving the effectiveness of the information transmission, and improving the performance of the system.

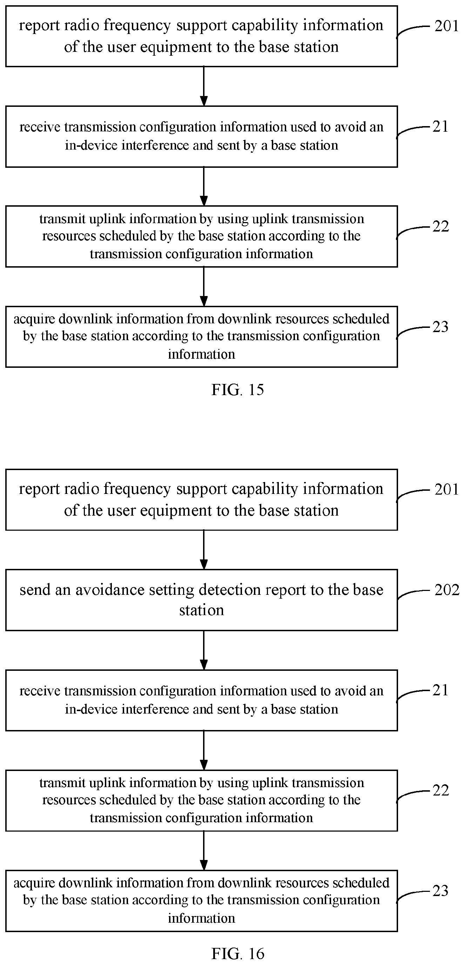

Referring to FIG. 15, it shows a flowchart of an information transmission method according to an exemplary embodiment. Before performing the above step 21, the method may further include:
in step 201, the UE reporting its radio frequency support capability information to the base station, so that the base station determines whether the in-device interference may occur according to the radio frequency support capability information.

This step corresponds to step 111 in FIG. 3 above. The UE may report its own radio frequency support capability to the base station when firstly accessing the base station, so that the base station determines whether in-device interference may occur according to the radio frequency support capability of the UE.

Referring to FIG. 16, it shows a flowchart of an information transmission method according to an exemplary embodiment. Before performing the above step 21, the method may further include:
in the step 202, sending an avoidance setting detection report to the base station, wherein the avoidance setting detection report is used to report whether the UE triggers a preset operation when the in-device interference occurs, so that at least one working frequency range involved in the in-device interference stops transmitting information.

This step corresponds to the base station acquiring the avoidance setting detection report to determine whether the UE performs the preset interference avoidance setting, and details are not described herein again.

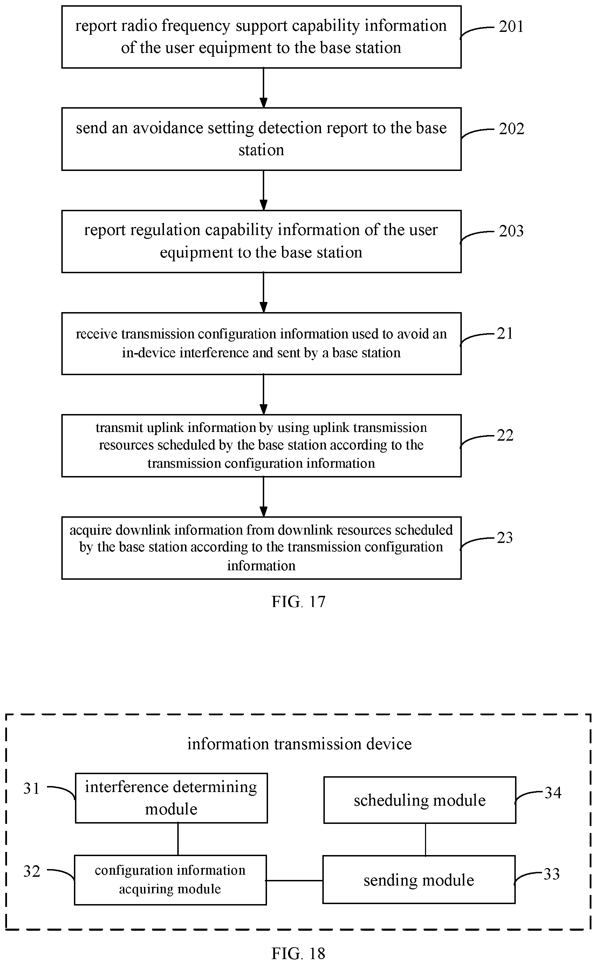

Referring to FIG. 17, it shows a flowchart of an information transmission method according to an exemplary embodiment. Before performing the above step 21, the method may further include:
in step 203, the UE reporting regulation capability information of the user equipment to the base station, so that the base station determines whether the user equipment supports the transmission time interval adjustment function according to the regulation capability information.

This step corresponds to step 121 in FIG. 6 above. The UE reports its own regulation capability information to the base station, so that the base station determines whether the UE supports the time interval adjustment function, thereby determining whether to perform the subsequent steps.

For the above methods and embodiments, for the sake of brevity, they are all described as a series of combinations of actions, but those skilled in the art should understand that the present disclosure is not limited by the order of described actions, because according to the present disclosure, some steps can be performed in other orders or at the same time.

In addition, those skilled in the art should also understand that the embodiments described in the specification are all optional embodiments, and the actions and modules involved are not necessarily required by the disclosure.

Corresponding to the above application function implementation method embodiment, the present disclosure also provides application function implementation device and corresponding terminal embodiment.

Referring to FIG. 18, it shows a flowchart of an information transmission device according to an exemplary embodiment, which is disposed in the base station, the device may include:
an interference determining module 31, configured to determine whether in-device interference may occur in user equipment;
a configuration information acquiring module 32, configured to acquire transmission configuration information for avoiding the in-device interference when it is determined that the in-device interference may occur in the user equipment, wherein the transmission configuration information includes: an adjustment parameter of a transmission time interval;
a sending module 33, configured to send the transmission configuration information to the user equipment;
a scheduling module 34, configured to schedule an uplink transmission resource and a downlink transmission resource according to the transmission configuration information, such that the user equipment performs transmission of uplink information within an original transmission time interval in such a way that at least transmission of control information of downlink scheduling is not interfered.

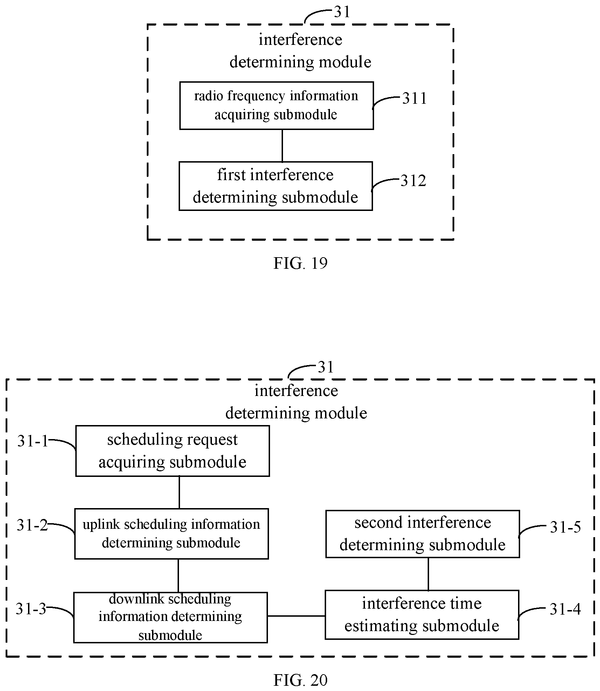

Referring to FIG. 19, it shows a flowchart of another information transmission device according to an exemplary embodiment. On the basis of the embodiment of device shown in FIG. 18, the interference determining module 31 may include:
a radio frequency information acquiring submodule 311, configured to acquire radio frequency support capability information of the user equipment, wherein the radio frequency support capability information includes: an uplink working frequency range and a downlink working frequency range;
a first interference determining submodule 322, configured to determine whether an in-device interference may occur in the user equipment according to the uplink working frequency range and the downlink working frequency range.

Referring to FIG. 20, it shows a flowchart of another information transmission device according to an exemplary embodiment. On the basis of the embodiment of device shown in FIG. 18, the interference determining module 31 may include:
a scheduling request acquiring submodule 31-1, configured to acquire uplink scheduling request information of the user equipment;
an uplink scheduling information determining submodule 31-2, configured to determine an uplink working frequency range and an uplink scheduling time according to the uplink scheduling request information;
a downlink scheduling information determining submodule 31-3, configured to determine downlink scheduling information for the user equipment, wherein the downlink scheduling information includes: a downlink working frequency range and a downlink scheduling time;
an interference time estimating submodule 31-4, configured to estimate an interference period according to the uplink scheduling time and the downlink scheduling time;
a second interference determining submodule 31-5, configured to determine whether in-device interference may occur in user equipment within the interference period , according to the uplink working frequency range and the downlink working frequency range.

In another embodiment of the present disclosure, on the basis of the embodiment shown in FIG. 19 or 20, the interference determining module 31 may further include:
a third determining submodule, configured to determine that the user equipment does not preset an interference avoidance setting, wherein the interference avoidance setting is: when the in-device interference occurs, the preset operation is triggered to stop information transmission of at least one working frequency range involved in the in-device interference.

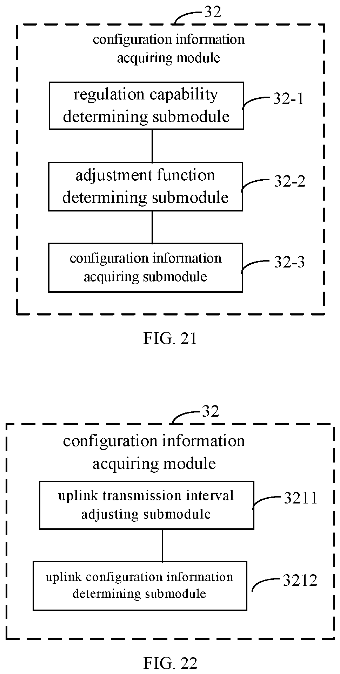

Referring to FIG. 21, it shows a flowchart of another information transmission device according to an exemplary embodiment. On the basis of the embodiment of device shown in FIG. 18, the configuration information acquiring module 32 may include:
a regulation capability determining submodule 32-1, configured to determine a transmission regulation capability information of the user equipment;
an adjustment function determining submodule 32-2, configured to determine, according to the transmission regulation capability information, whether the user equipment supports a transmission time interval adjustment function;
a configuration information acquiring submodule 32-3, configured to determine the transmission configuration information, if the user equipment supports the transmission time interval adjustment function.

In an embodiment of the present disclosure, the configuration information acquiring module 32 may be configured to perform adjustment based on an original transmission time interval and acquire the transmission configuration information, wherein the transmission configuration information at least includes: uplink transmission configuration information.

Referring to FIG. 22, it shows a flowchart of another information transmission device according to an exemplary embodiment. On the basis of the embodiment of device shown in FIG. 20, the configuration information acquiring module 32 may include:
an uplink transmission interval adjusting submodule 3211, configured to shorten an interval duration based on that an ending time of the original transmission time interval remains unchanged, and determine a time range of a target uplink transmission interval;
an uplink configuration information determining submodule 3212, configured to determine the uplink transmission configuration information according to the time range of the target uplink transmission interval.

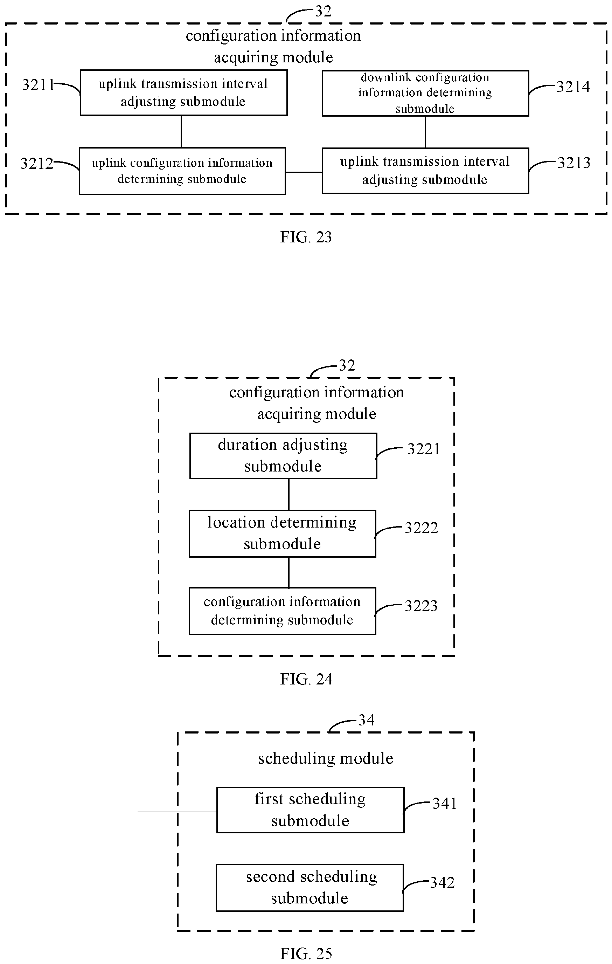

Referring to FIG. 23, it shows a flowchart of another information transmission device according to an exemplary embodiment. On the basis of the embodiment of device shown in FIG. 22, the configuration information acquiring module 32 may further include:
a downlink transmission interval adjusting submodule 3213, configured to shorten the interval duration based on that a starting time of the original transmission time interval remains unchanged, and determine a time range of a target downlink transmission interval;
a downlink configuration information determining submodule 3214, configured to determine the downlink transmission configuration information according to the time range of the target downlink transmission interval.

Referring to FIG. 24, it shows a flowchart of another information transmission device according to an exemplary embodiment. On the basis of the embodiment of device shown in FIG. 18, the configuration information acquiring module 32 may include:
a duration adjusting submodule 3221, configured to shorten a duration of the original transmission time interval, and determine a target uplink transmission interval duration and a target downlink transmission interval duration respectively;
a location determining submodule 3222, configured to adjust the target uplink transmission interval duration and a starting time and an ending time of the target uplink transmission interval duration, so that a time range of the target uplink transmission interval and a time range of the target downlink transmission interval do not coincide with each other;
a configuration information determining submodule 3223, configured to determine the transmission configuration information according to the time range of the target uplink transmission interval and the time range of the target downlink transmission interval.

Correspondingly, in the embodiment of device described in any of FIG. 22 to FIG. 24, the sending module 33 may be configured to send the transmission configuration information to the user equipment before the interference is about to occur.

Referring to FIG. 25, it shows a flowchart of another information transmission device according to an exemplary embodiment. On the basis of the embodiment of any of devices shown in FIG. 22 to FIG. 24, the scheduling module 34 may include:
a first scheduling submodule 341, configured to schedule uplink transmission resources for the uplink working frequency range according to the target uplink transmission interval in an original transmission time interval;
a second scheduling submodule 342, configured to schedule downlink transmission resources for the downlink working frequency range according to the original transmission time interval or the target downlink transmission interval in the same original transmission time interval.

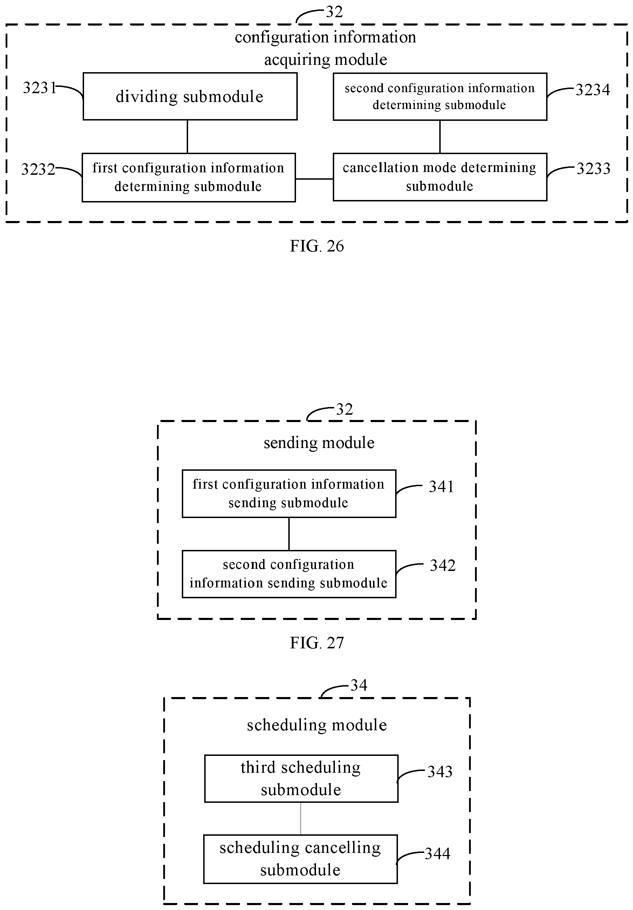

Referring to FIG. 26, it shows a flowchart of another information transmission device according to an exemplary embodiment. On the basis of the device embodiment shown in FIG. 19, the configuration information acquiring module 32 may include:
a dividing submodule 3231, configured to divide the original transmission time interval into a preset number of target transmission intervals;
a first configuration information determining submodule 3232, configured to determine first transmission configuration information according to a time range of each of the each target transmission intervals;
a cancellation mode determining submodule 3233, configured to determine a transmission cancellation mode of the target transmission interval, wherein the transmission cancellation mode is used to cancel a target uplink transmission interval and/or a target downlink transmission interval in an original transmission time interval when the interference is about to occur, so that uplink transmission and transmission of downlink scheduling control information do not coincide with each other;
a second configuration information determining submodule 3234, configured to acquire second transmission configuration information according to the transmission cancellation mode.

Referring to FIG. 27, it shows a flowchart of another information transmission device according to an exemplary embodiment. On the basis of the embodiment of device shown in FIG. 26, the sending module 34 may include:
a first configuration information sending submodule 341, configured to send the first transmission configuration information to the user equipment when the user equipment accesses a network;
a second configuration information sending submodule 342, configured to send the second transmission configuration information to the user equipment before the interference is about to occur.

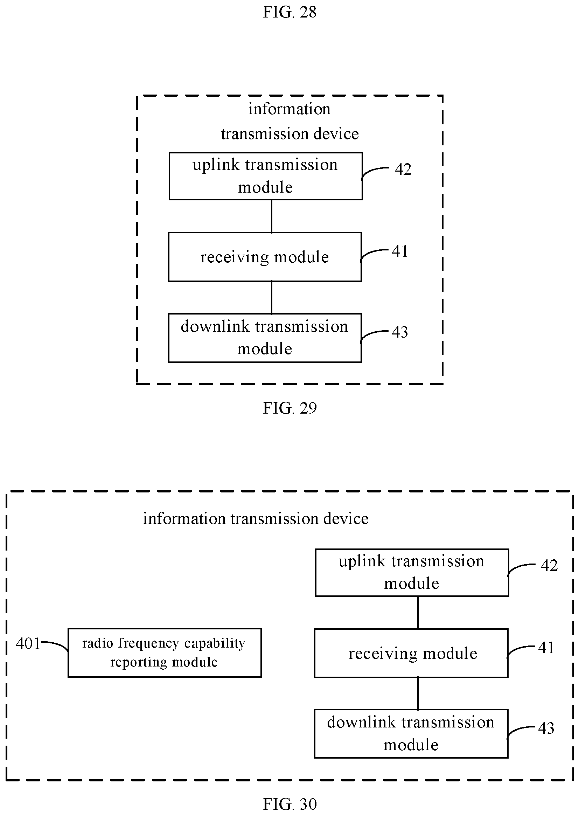

Referring to FIG. 28, it shows a flowchart of another information transmission device according to an exemplary embodiment. On the basis of the embodiment of device shown in FIG. 27, the scheduling module 34 may include:
a third scheduling submodule 343, configured to schedule the uplink transmission resource and the downlink transmission resource according to the target transmission interval, after the user equipment accesses the network;
a scheduling cancelling submodule 344, configured to, when the interference is about to occur, in an original transmission time interval, cancel scheduling of the uplink transmission resource corresponding to at least one target uplink transmission interval for the uplink working frequency range, and/or cancel scheduling of the downlink transmission resource corresponding to at least one target downlink transmission interval for the downlink working frequency range.

Correspondingly, the present disclosure also provides an information transmission device, which is disposed in user equipment. Referring to FIG. 29, it shows a flowchart of an information transmission device according to an exemplary embodiment. The device may include:
a receiving module 41, configured to receive transmission configuration information sent by a base station for avoiding an in-device interference, wherein the transmission configuration information includes: an adjustment parameter of a transmission time interval;
an uplink transmission module 42, configured to transmit uplink information by using uplink transmission resources scheduled by the base station according to the transmission configuration information;
a downlink transmission module 43, configured to acquire downlink information from downlink resources scheduled by the base station according to the transmission configuration information.

Referring to FIG. 30, it shows a flowchart of another information transmission device according to an exemplary embodiment. On the basis of the embodiment of device shown in FIG. 29, the device may further include:
a radio frequency capability reporting module 401, configured to report radio frequency support capability information of the user equipment to the base station, so that the base station determines whether the in-device interference may occur according to the radio frequency support capability information.

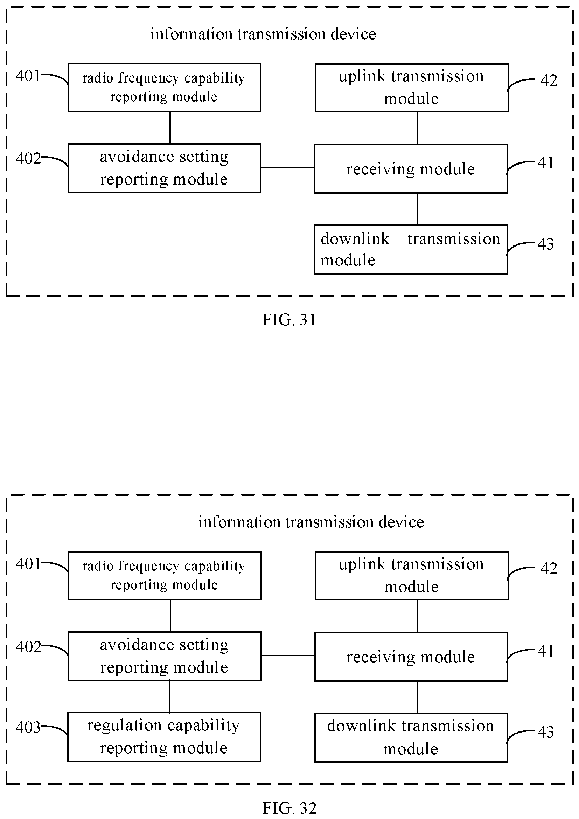

Referring to FIG. 31, it shows a flowchart of another information transmission device according to an exemplary embodiment. On the basis of the embodiment of device shown in FIG. 30, the device may further include:
an avoidance setting reporting module 402, configured to send an avoidance setting detection report to the base station, wherein the avoidance setting detection report is used to report whether the user equipment triggers a preset operation when the in-device interference occurs, so that information transmission of at least one working frequency range involved in the in-device interference stops.

Referring to FIG. 32, it shows a flowchart of another information transmission device according to an exemplary embodiment. On the basis of the embodiment of device shown in FIG. 31, the device may further include:
a regulation capability reporting module 403, configured to report regulation capability information of the user equipment to the base station, so that the base station determines whether the user equipment supports a transmission time interval adjustment function according to the regulation capability information.

For the embodiment of the device, since it basically corresponds to the embodiment of the method, reference may be made to the partial description of the embodiment of the method. The embodiments of the device described above are merely illustrative, wherein the units described as separate components may or may not be physically separate, and the components displayed as units may or may not be physical units, i.e., they may be located in one place, or they can be distributed to a plurality of network units. Some or all of the modules may be selected according to actual needs to achieve the purpose of the solution of the present disclosure. Those of ordinary skill in the art can understand and implement without any creative effort.

Correspondingly, on the one hand, there is provided an information transmission device including:
a processor;
a memory for storing instructions executable by the processor;
wherein the processor is configured to perform:
   determining whether in-device interference may occur in user equipment;
   if it is determined that the in-device interference may occur, acquiring transmission configuration information for avoiding the in-device interference, wherein the transmission configuration information includes: an adjustment parameter of a transmission time interval;
   sending the transmission configuration information to the user equipment;
   scheduling an uplink transmission resource and a downlink transmission resource according to the transmission configuration information, such that the user equipment performs transmission of uplink information within an original transmission time interval in such a way that at least transmission of control information of downlink scheduling is not interfered.

On the other hand, there is provided an information transmission device including:
a processor;
a memory for storing instructions executable by the processor;
wherein the processor is configured to perform:
   receiving transmission configuration information used to avoidan in-device interference sent by a base station, wherein the transmission configuration information includes: an adjustment parameter of a transmission time interval;
   transmitting uplink information by using uplink transmission resource scheduled by the base station according to the transmission configuration information;
   acquiring downlink information from downlink resources scheduled by the base station according to the transmission configuration information.

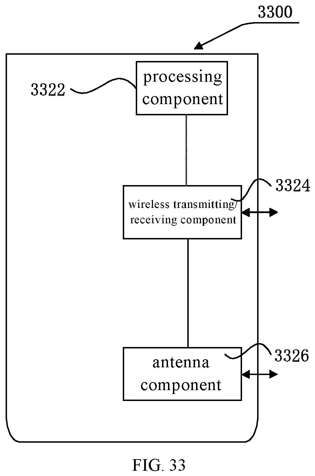

As shown in FIG. 33, a schematic structural diagram of an information transmission device 3300 according to an exemplary embodiment of the present disclosure. The device 3300 can be provided as a base station. Referring to FIG. 33, the device 3300 includes a processing component 3322, a wireless transmitting/receiving component 3324, an antenna component 3326, and a signal processing portion specific to the wireless interface, the processing component 3322 can further include one or more processors.

One of the processors in the processing component 3322 can be configured to perform:
determining whether in-device interference may occur in user equipment;
if it is determined that the in-device interference may occur, acquiring transmission configuration information for avoiding the in-device interference, wherein the transmission configuration information includes: an adjustment parameter of a transmission time interval;
sending the transmission configuration information to the user equipment;
scheduling an uplink transmission resource and a downlink transmission resource according to the transmission configuration information, such that the user equipment performs transmission of uplink information within an original transmission time interval in such a way that at least transmission of control information of downlink scheduling is not interfered.

In an exemplary embodiment, there is also provided a non-transitory computer readable storage medium including instructions, with computer instructions stored thereon, wherein the computer instructions may be executable by the processing component 3322 of device 3300 to implement any of the information transmission methods described in FIG. 2 to FIG. 13-2. For example, the non-transitory computer readable storage medium may be a ROM, a random access memory (RAM), a CD-ROM, a magnetic tape, a floppy disk, and an optical data storage apparatus, or the like.

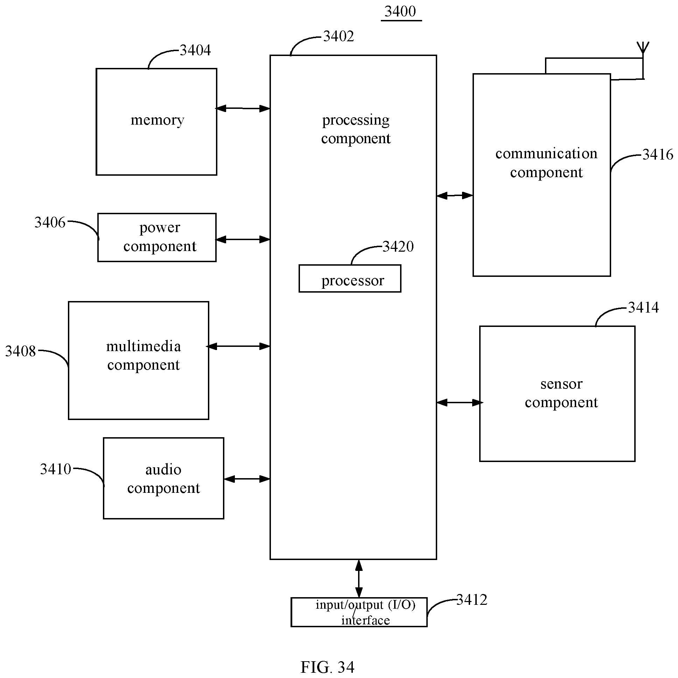

FIG. 34 is a schematic structural diagram of another information transmission device 3400 according to an exemplary embodiment. For example, the device 3400 may be a terminal, and may specifically be a mobile phone, a computer, a digital broadcast terminal, a messaging device, a game console, a tablet device, a medical device, a fitness device, a personal digital assistant, a wearable device such as a smart watch, smart glasses, smart bracelets, smart running shoes, etc.

Referring to FIG. 34, the device 3400 may include one or more of the following components: a processing component 3402, a memory 3404, a power component 3406, a multimedia component 3408, an audio component 3410, an input/output (I/O) interface 3412, a sensor component 3414, and a communication component 3416.

The processing component 3402 typically controls overall operations of the device 3400, such as the operations associated with display, telephone calls, data communications, camera operations, and recording operations. The processing component 3402 may include one or more processors 3420 to execute instructions to perform all or part of the steps in the above described methods. Moreover, the processing component 3402 may include one or more modules which facilitate the interaction between the processing component 3402 and other components. For instance, the processing component 3402 may include a multimedia module to facilitate the interaction between the multimedia component 3408 and the processing component 3402.

The memory 3404 is configured to store various types of data to support the operation of the device 3400. Examples of such data include instructions for any applications or methods operated on the device 3400, contact data, phonebook data, messages, pictures, video, etc. The memory 3404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 3406 provides power to various components of the device 3400. The power component 3406 may include a power management system, one or more power sources, and any other components associated with the generation, management, and distribution of power in the device 3400.

The multimedia component 3408 includes a screen providing an output interface between the device 3400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 3408 includes a front camera and/or a rear camera. The front camera and the rear camera may receive an external multimedia datum while the device 3400 is in an operation mode, such as a photographing mode or a video mode. Each of the front camera and the rear camera may be a fixed optical lens system or have focus and optical zoom capability.

The audio component 3410 is configured to output and/or input audio signals. For example, the audio component 3410 includes a microphone ("MIC") configured to receive an external audio signal when the device 3400 is in an operation mode, such as a call mode, a recording mode, and a voice recognition mode. The received audio signal may be further stored in the memory 3404 or transmitted via the communication component 3416. In some embodiments, the audio component 3410 further includes a speaker to output audio signals.

The I/O interface 3412 provides an interface between the processing component 3402 and peripheral interface modules, such as a keyboard, a click wheel, buttons, and the like. The buttons may include, but are not limited to, a home button, a volume button, a starting button, and a locking button.

The sensor component 3414 includes one or more sensors to provide status assessments of various aspects of the device 3400. For instance, the sensor component 3414 may detect an open/closed status of the device 3400, relative positioning of components, e.g., the display and the keypad, of the device 3400, a change in position of the device 3400 or a component of the device 3400, a presence or absence of user contact with the device 3400, an orientation or an acceleration/deceleration of the device 3400, and a change in temperature of the device 3400. The sensor component 3414 may include a proximity sensor configured to detect the presence of nearby objects without any physical contact. The sensor component 3414 may also include a light sensor, such as a CMOS or CCD image sensor, for use in imaging applications. In some embodiments, the sensor component 3414 may also include an accelerometer sensor, a gyroscope sensor, a magnetic sensor, a pressure sensor, or a temperature sensor.

The communication component 3416 is configured to facilitate communication, wired or wirelessly, between the device 3400 and other devices. The device 3400 can access a wireless network based on a communication standard, such as WiFi, 2G, or 3G, or a combination thereof. In one exemplary embodiment, the communication component 3416 receives a broadcast signal or broadcast associated information from an external broadcast management system via a broadcast channel. In one exemplary embodiment, the communication component 3416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 3400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 3404 including instructions, which may be executed by the processor 3420 in the device 3400 to perform any of information transmission methods described in the FIGs. 14-17. For example, the non-transitory computer-readable storage medium may be a ROM, a RAM, a CD-ROM, a magnetic tape, a floppy disc, an optical data storage apparatus, and the like.

Other embodiments of the present disclosure will be readily apparent to those skilled in the art after considering the specification and practicing the disclosure disclosed herein. The present application is intended to cover any variations, uses, or adaptations of the present disclosure, which follow the general principles of the disclosure and include common general knowledge or common technical means in the art that are not disclosed in the present disclosure. The specification and embodiments are deemed to be exemplary only and the true scope and spirit of this disclosure is indicated by the claims below.

It should be understood that this disclosure is not limited to the exact structure described above and shown in the accompanying drawings, and various modifications and changes may be made without departing from its scope. The scope of the disclosure is to be limited only by the appended claims.

## Claims

1. An information transmission method, wherein the method is applied in a base station and comprises:
determining whether in-device interference may occur in user equipment;
if it is determined that the in-device interference may occur, acquiring transmission configuration information for avoiding the in-device interference, wherein the transmission configuration information comprises: an adjustment parameter of a transmission time interval;
sending the transmission configuration information to the user equipment;
scheduling an uplink transmission resource and a downlink transmission resource according to the transmission configuration information, such that the user equipment performs transmission of uplink information within an original transmission time interval in such a way that at least transmission of control information of downlink scheduling is not interfered.

2. The method according to claim 1, wherein, determining whether in-device interference may occur in user equipment comprises:
acquiring radio frequency support capability information of the user equipment, wherein the radio frequency support capability information comprises: an uplink working frequency range and a downlink working frequency range;
determining whether the in-device interference may occur in the user equipment according to the uplink working frequency range and the downlink working frequency range.

3. The method according to claim 1, wherein, determining whether the in-device interference may occur in the user equipment comprises:
acquiring uplink scheduling request information of the user equipment;
determining an uplink working frequency range and an uplink scheduling time according to the uplink scheduling request information;
determining downlink scheduling information for the user equipment, wherein the downlink scheduling information comprises: a downlink working frequency range and a downlink scheduling time;
estimating an interference period according to the uplink scheduling time and the downlink scheduling time;
determining whether the in-device interference may occur in user equipment within the interference period, according to the uplink working frequency range and the downlink working frequency range.

4. The method according to claim 2 or 3, wherein, determining whether the in-device interference may occur in the user equipment further comprises:
determining that the user equipment does not preset an interference avoidance setting, wherein the interference avoidance setting is: when the in-device interference occurs, a preset operation is triggered to stop information transmission of at least one working frequency range involved in the in-device interference.

5. The method according to claim 1, wherein, acquiring the transmission configuration information for avoiding the in-device interference comprises:
determining transmission regulation capability information of the user equipment;
determining, according to the transmission regulation capability information, whether the user equipment supports a transmission time interval adjustment function;
determining the transmission configuration information, if the user equipment supports the transmission time interval adjustment function.

6. The method according to claim 1, wherein, acquiring the transmission configuration information for avoiding the in-device interference comprises:
performing adjustment based on the original transmission time interval, and acquiring the transmission configuration information, wherein the transmission configuration information at least comprises: uplink transmission configuration information.

7. The method according to claim 6, wherein, the performing adjustment based on the original transmission time interval and acquiring the transmission configuration information comprises:
shortening an interval duration based on that an ending time of the original transmission time interval remains unchanged, and determining a time range of a target uplink transmission interval;
determining the uplink transmission configuration information according to the time range of the target uplink transmission interval.

8. The method according to claim 7, wherein, acquiring the transmission configuration information based on an original transmission time interval further comprises:
shortening the interval duration based on that a starting time of the original transmission time interval remains unchanged, and determining a time range of a target downlink transmission interval;
determining the downlink transmission configuration information according to the time range of the target downlink transmission interval.

9. The method according to claim 6, wherein, acquiring the transmission configuration information based on an original transmission time interval comprises:
shortening a duration of the original transmission time interval, and determining a target uplink transmission interval duration and a target downlink transmission interval duration respectively;
adjusting the target uplink transmission interval duration and a starting time and an ending time of the target uplink transmission interval duration, so that a time range of the target uplink transmission interval and a time range of the target downlink transmission interval do not coincide with each other;
determining the transmission configuration information according to the time range of the target uplink transmission interval and the time range of the target downlink transmission interval.

10. The method according to any of claims 7 to 9, wherein sending the transmission configuration information to the user equipment comprises:
sending the transmission configuration information to the user equipment before the interference is about to occur.

11. The method according to claim 10, wherein, scheduling the uplink transmission resource and the downlink transmission resource according to the transmission configuration information comprises:
scheduling uplink transmission resources for the uplink working frequency range according to the target uplink transmission interval in an original transmission time interval;
scheduling downlink transmission resources for the downlink working frequency range according to the original transmission time interval or the target downlink transmission interval in the same original transmission time interval.

12. The method according to claim 2, wherein, acquiring the transmission configuration information for avoiding the in-device interference comprises:
dividing the original transmission time interval into a preset number of target transmission intervals;
determining first transmission configuration information according to a time range of each of the target transmission intervals;
determining a transmission cancellation mode of the target transmission interval, wherein the transmission cancellation mode is used to cancel a target uplink transmission interval and/or a target downlink transmission interval in an original transmission time interval when the interference is about to occur, so that uplink transmission and transmission of downlink scheduling control information do not coincide with each other;
acquiring second transmission configuration information according to the transmission cancellation mode.

13. The method according to claim 12, wherein sending the transmission configuration information to the user equipment comprises:
sending the first transmission configuration information to the user equipment when the user equipment accesses a network;
sending the second transmission configuration information to the user equipment before the interference is about to occur.

14. The method according to claim 13, wherein, scheduling the uplink transmission resource and the downlink transmission resource according to the transmission configuration information comprises:
scheduling the uplink transmission resource and the downlink transmission resource according to the target transmission interval, after the user equipment accesses the network;
when the interference is about to occur, in an original transmission time interval, cancelling scheduling of the uplink transmission resource corresponding to at least one target uplink transmission interval for the uplink working frequency range, and/or cancelling scheduling of the downlink transmission resource corresponding to at least one target downlink transmission interval for the downlink working frequency range.

15. An information transmission method, wherein the method is applied in user equipment and comprises:
receiving transmission configuration information from a base station to avoid an in-device interference, wherein the transmission configuration information comprises: an adjustment parameter of a transmission time interval;
transmitting uplink information by using uplink transmission resources scheduled by the base station according to the transmission configuration information;
acquiring downlink information from downlink resources scheduled by the base station according to the transmission configuration information.

16. The method according to claim 15, wherein, before receiving the transmission configuration information from the base station to avoid the in-device interference, the method further comprises:
reporting radio frequency support capability information of the user equipment to the base station, so that the base station determines whether the in-device interference may occur according to the radio frequency support capability information.

17. The method of claim 15, wherein the method further comprises:
sending an avoidance setting detection report to the base station, wherein the avoidance setting detection report is used to report whether the user equipment triggers a preset operation when the in-device interference occurs, so that information transmission of at least one working frequency range involved in the in-device interference stops.

18. The method of claim 15, wherein the method further comprises:
reporting regulation capability information of the user equipment to the base station, so that the base station determines whether the user equipment supports a transmission time interval adjustment function according to the regulation capability information.

19. An information transmission device, wherein the device is applied in a base station and comprises:
an interference determining module, configured to determine whether in-device interference may occur in user equipment;
a configuration information acquiring module, configured to acquire transmission configuration information for avoiding the in-device interference when it is determined that the in-device interference may occur in the user equipment, wherein the transmission configuration information comprises: an adjustment parameter of a transmission time interval;
a sending module, configured to send the transmission configuration information to the user equipment;
a scheduling module, configured to schedule an uplink transmission resource and a downlink transmission resource according to the transmission configuration information, such that the user equipment performs transmission of uplink information within an original transmission time interval in such a way that at least transmission of control information of downlink scheduling is not interfered.

20. The device according to claim 19, wherein the interference determining module comprises:
a radio frequency information acquiring submodule, configured to acquire radio frequency support capability information of the user equipment, wherein the radio frequency support capability information comprises: an uplink working frequency range and a downlink working frequency range;
a first interference determining submodule, configured to determine whether in-device interference may occur in the user equipment according to the uplink working frequency range and the downlink working frequency range.

21. The device according to claim 19, wherein the interference determining module comprises:
a scheduling request acquiring submodule, configured to acquire uplink scheduling request information of the user equipment;
an uplink scheduling information determining submodule, configured to determine an uplink working frequency range and an uplink scheduling time according to the uplink scheduling request information;
a downlink scheduling information determining submodule, configured to determine downlink scheduling information for the user equipment, wherein the downlink scheduling information comprises: a downlink working frequency range and a downlink scheduling time;
an interference time estimating submodule, configured to estimate an interference period according to the uplink scheduling time and the downlink scheduling time;
a second determining submodule, configured to determine whether in-device interference may occur in user equipment within the interference period, according to the uplink working frequency range and the downlink working frequency range.

22. The device according to claim 20 or 21, wherein the interference determining module further comprises:
a third determining submodule, configured to determine that the user equipment does not preset an interference avoidance setting, wherein the interference avoidance setting is: when the in-device interference occurs, the preset operation is triggered to stop information transmission of at least one working frequency range involved in the in-device interference.

23. The device according to claim 19, wherein the configuration information acquiring module comprises:
a regulation capability determining submodule, configured to determine transmission regulation capability information of the user equipment;
an adjustment function determining submodule, configured to determine, according to the transmission regulation capability information, whether the user equipment supports a transmission time interval adjustment function;
a configuration information acquiring submodule, configured to determine the transmission configuration information, if the user equipment supports the transmission time interval adjustment function.

24. The device according to claim 19, wherein the configuration information acquiring module is configured to perform adjustment based on an original transmission time interval and acquire the transmission configuration information, wherein the transmission configuration information at least comprises: uplink transmission configuration information.

25. The device according to claim 24, wherein the configuration information acquiring module comprises:
an uplink transmission interval adjusting submodule, configured to shorten an interval duration based on that an ending time of the original transmission time interval remains unchanged, and determine a time range of a target uplink transmission interval;
an uplink configuration information determining submodule, configured to determine the uplink transmission configuration information according to the time range of the target uplink transmission interval.

26. The device according to claim 25, wherein the configuration information acquiring module further comprises:
a downlink transmission interval adjusting submodule, configured to shorten the interval duration based on that a starting time of the original transmission time interval remains unchanged, and determine a time range of a target downlink transmission interval;
a downlink configuration information determining submodule, configured to determine the downlink transmission configuration information according to the time range of the target downlink transmission interval.

27. The device according to claim 24, wherein the configuration information acquiring module comprises:
a duration adjusting submodule, configured to shorten a duration of the original transmission time interval, and determine a target uplink transmission interval duration and a target downlink transmission interval duration respectively;
a location determining submodule, configured to adjust the target uplink transmission interval duration and a starting time and an ending time of the target uplink transmission interval duration, so that a time range of the target uplink transmission interval and a time range of the target downlink transmission interval do not coincide with each other;
a configuration information determining submodule, configured to determine the transmission configuration information according to the time range of the target uplink transmission interval and the time range of the target downlink transmission interval.

28. The device according to any one of claims 25 to 27, wherein the sending module is configured to send the transmission configuration information to the user equipment before the interference is about to occur.

29. The device according to claim 28, wherein the scheduling module comprises:
a first scheduling submodule, configured to schedule uplink transmission resources for the uplink working frequency range according to the target uplink transmission interval in an original transmission time interval;
a second scheduling submodule, configured to schedule downlink transmission resources for the downlink working frequency range according to the original transmission time interval or the target downlink transmission interval in the same original transmission time interval.

30. The device according to claim 20, wherein the configuration information acquiring module comprises:
a dividing submodule, configured to divide the original transmission time interval into a preset number of target transmission intervals;
a first configuration information determining submodule, configured to determine first transmission configuration information according to a time range of each of the target transmission intervals;
a cancellation mode determining submodule, configured to determine a transmission cancellation mode of the target transmission interval, wherein the transmission cancellation mode is used to cancel a target uplink transmission interval and/or a target downlink transmission interval in an original transmission time interval when the interference is about to occur, so that uplink transmission and transmission of downlink scheduling control information do not coincide with each other;
a second configuration information determining submodule, configured to acquire second transmission configuration information according to the transmission cancellation mode.

31. The device according to claim 30, wherein the sending module comprises:
a first configuration information sending submodule, configured to send the first transmission configuration information to the user equipment when the user equipment accesses a network;
a second configuration information sending submodule, configured to send the second transmission configuration information to the user equipment before the interference is about to occur.

32. The device according to claim 31, wherein the scheduling module comprises:
a third scheduling submodule, configured to schedule the uplink transmission resource and the downlink transmission resource according to the target transmission interval, after the user equipment accesses the network;
a scheduling cancelling submodule, configured to, when the interference is about to occur, in an original transmission time interval, cancel scheduling of the uplink transmission resource corresponding to at least one target uplink transmission interval for the uplink working frequency range, and/or cancel scheduling of the downlink transmission resource corresponding to at least one target downlink transmission interval for the downlink working frequency range.

33. An information transmission device, wherein the device is applied in user equipment and comprises:
a receiving module, configured to receive transmission configuration information sent by a base station for avoiding an in-device interference, wherein the transmission configuration information comprises: an adjustment parameter of a transmission time interval;
an uplink transmission module, configured to transmit uplink information by using uplink transmission resources scheduled by the base station according to the transmission configuration information;
a downlink transmission module, configured to acquire downlink information from downlink resources scheduled by the base station according to the transmission configuration information.

34. The device according to claim 33, wherein the device further comprises:
a radio frequency capability reporting module, configured to report radio frequency support capability information of the user equipment to the base station, so that the base station determines whether in-device interference may occur according to the radio frequency support capability information.

35. The device according to claim 33, wherein the device further comprises:
an avoidance setting reporting module, configured to send an avoidance setting detection report to the base station, wherein the avoidance setting detection report is used to report whether the user equipment triggers a preset operation when the in-device interference occurs, so that information transmission of at least one working frequency range involved in the in-device interference stops.

36. The device according to claim 33, wherein the device further comprises:
a regulation capability reporting module, configured to report regulation capability information of the user equipment to the base station, so that the base station determines whether the user equipment supports a transmission time interval adjustment function according to the regulation capability information.

37. Anon-temporary computer readable storage medium having stored thereon computer instructions, wherein the instructions are executed by a processor to implement the steps of method of any one of claims 1 to 14.

38. Anon-temporary computer readable storage medium having stored thereon computer instructions, wherein the instructions are executed by a processor to implement the steps of method of any one of claims 15 to 18.

39. An information transmission device, wherein the device comprises:
a processor;
a memory for storing instructions executable by the processor;
wherein the processor is configured to perform:
determining whether in-device interference may occur in user equipment;
if it is determined that the in-device interference may occur, acquiring transmission configuration information for avoiding the in-device interference, wherein the transmission configuration information comprises: an adjustment parameter of a transmission time interval;
sending the transmission configuration information to the user equipment;
scheduling an uplink transmission resource and a downlink transmission resource according to the transmission configuration information, such that the user equipment performs transmission of uplink information within an original transmission time interval in such a way that at least transmission of control information of downlink scheduling is not interfered.

40. An information transmission device, wherein the device comprises:
a processor;
a memory for storing instructions executable by the processor;
wherein the processor is configured to perform:
receiving transmission configuration information from a base station to avoid an in-device interference, wherein the transmission configuration information comprises: an adjustment parameter of a transmission time interval;
transmitting uplink information by using uplink transmission resources scheduled by the base station according to the transmission configuration information;
acquiring downlink information from downlink resources scheduled by the base station according to the transmission configuration information.
